# EUROPÄISCHE PATENTANMELDUNG

(11) **EP 2 453 093 A1**
(43) Veröffentlichungstag der Anmeldung: **16.05.2012**
(21) Anmeldenummer: 12154135.3
(22) Anmeldetag: 23.10.2009
(51) Int. Cl.: E05F 15/10, E05F 15/14, E05F 5/02, F16F 1/376, H02K 5/24

(54) **Antriebsvorrichtung zum motorischen Bewegen einer Schiebetür**

(30) Priorität: 10.12.2008 DE 102008061459; 10.12.2008 DE 202008016336 U; 17.04.2009 DE 102009017867; 17.04.2009 DE 202009005715 U; 10.07.2009 DE 102009032616; 10.07.2009 DE 202009009450 U
(62) Teilanmeldung aus: 09751841.9
(71) Anmelder: Hettich-Heinze GmbH & Co. KG, 32139 Spenge (DE)
(72) Erfinder: Nuttelmann, Frank, 32312 Lübbecke (DE); Ihnofeld, Werner, 33813 Oerlinghausen (DE); Montecchio, Andreas, 32105 Bad Salzuflen (DE); Feld, Steffen, 33378 Rheda Wiedenbrück (DE); Neumüller, Petra, 32105 Bad Salzuflen (DE)
(74) Vertreter: Specht, Peter

(57) **Zusammenfassung**

Antriebsvorrichtung (1) zum motorischen Bewegen- insbesondere zum Öffnen und/oder Schließen - beweglicher Möbelteile von Möbeln, insbesondere zum Öffnen und/oder Schließen einer Schiebetür (2) an einem wenigstens eine oder mehrere der Schiebetüren (2) aufweisenden Möbel (3), die folgendes aufweist: ein erstes Gehäuse (104) aufweist und ein zweites Gehäuse (105), wobei zwischen dem ersten Gehäuse und dem zweiten Gehäuse wenigstens ein elastisches Element (106) oder mehrere elastische Elemente angeordnet ist/sind, wobei das erste Gehäuse vorzugsweise ein Innengehäuse und das zweite Gehäuse ein das Innengehäuse aufnehmendes Außengehäuse ist.

## Beschreibung

Die Erfindung betrifft eine Antriebsvorrichtung zum motorischen Bewegen- insbesondere zum Öffnen und/oder Schließen - beweglicher Möbelteile von Möbeln, die insbesondere zum Öffnen und/oder Schließen einer Schiebetür an einem wenigstens eine oder mehrere der Schiebetüren aufweisenden Möbel ausgelegt ist und ein elastisches Element.

Es ist bekannt, bewegliche Möbelteile mit Hilfe von elektromotorisch betriebenen Antriebsvorrichtungen zu beschleunigen. Zum Stand der Technik sei auf die DE 2 0 2006 006 190 U1 und die DE 2 0 2006 006 189 U1 verwiesen.

Die bekannten Lösungen sind dabei zum Antrieb von Schiebetüren nicht oder nicht optimal geeignet.

Vor diesem Hintergrund ist es die Aufgabe der Erfindung, eine Antriebsvorrichtung für bewegliche Möbelteile zu schaffen, welche insbesondere zum Einsatz an Schiebetüren besonders vorteilhaft geeignet ist.

Die Erfindung löst diese Aufgabe durch den Gegenstand des Anspruchs 1.

Die Erfindung schafft noch ein elastisches Element nach den Ansprüchen 10 ff, das insbesondere für eine Antriebsvorrichtung für Möbel, insbesondere auch nach einem der darauf gerichteten Ansprüche, geeignet ist.

Vorteilhafte Ausgestaltungen der Erfindung sind den Unteransprüchen zu entnehmen.

Um die Geräuschminderung zu optimieren, ist es notwendig, zu verhindern, dass der Körperschall eines inneren Gehäuses sich direkt in ein äußere Gehäuse fortsetzen bzw. übertragen kann. Vom Außengehäuse könnte sich der Schall sonst auf die Schiene der Führungsanordnung und auf den Möbelkorpus übertragen. Insbesondere der Möbelkorpus wirkt als "Resonanzraum" und es würde ohne Maßnahmen zur Geräuschminderung eine Belästigung für den Nutzer auftreten. Insbesondere von einem Antrieb der bevorzugt in Schlafräumen eingesetzt wird, darf nahezu keine Geräuschemission ausgehen. Zu Geräuschminderung wird ein elastisches Element zwischen Innen- und Außengehäuse eingesetzt, dass bevorzugt beide Gehäuseteile nur linienförmig, nicht flächig, berührt. Eine punktförmige Berührung der beiden Gehäuseteile durch das zwischenliegende elastische Element im Sinne eines Kegels ist ebenfalls denkbar. Auch hier wirkt sich die geringe Kontaktfläche positiv, geräuschmindernd aus.

Es ist vorteilhaft, wenn keine durchgängige flächige Anlage zwischen dem elastischen Element und dem Innengehäuse bzw. dem Außengehäuse geschaffen wird sondern wenn das elastische Element jeweils in bestimmten Bereichen nur linienförmig an dem Innengehäuse und/oder dem Außengehäuse anliegt. Vorzugsweise ist die Form des elastischen Elementes so gewählt, dass die zu entkoppelten Bauteile nicht auf direktem Wege verbunden sind, sondern das Material unter einem Winkel auf die beiden zu entkoppelnden Teile trifft, der vorzugsweise zwischen 10° und 80° liegt. Der Winkel ermöglicht es dem elastischen Bauteil bzw. Element viel leichter, den zu dämpfenden Schwingungen auszuweichen, als es eine direkte Verbindung täte. Eine direkte Verbindung würde das Material lediglich auf Druck belasten, die "schräge" Verbindung belastet das Material (auch) auf Biegung.

Vorzugsweise besteht das wenigstens eine elastische Element aus einem Material, das eine verhältnismäßig hohe innere Dämpfung besitzt. Beispielsweise ist es ein Thermoplastisches Elastomer (TPE). Dieses Material trägt zu einer guten schallgedämmten Auslegung bei.

Vorzugsweise kann der Motor die gesamte Strecke von der Schließstellung bis zur maximal von ihm erreichbaren Öffnungsstellung voll bestromt werden - d.h., dass die Schiebetür auf einem nur kurzem Weg maximal beschleunigt werden kann. Während des Beschleunigungsvorgangs von 0 bis Maximum steigt der Strom vorzugsweise entsprechend einer Rampenfunktion an. Somit ergibt sich eine nahezu konstante Beschleunigung.

Darüber hinaus kann die Antriebsvorrichtung relativ klein gehalten werden und es ist nicht notwendig, sie über den maximalen Öffnungsweg der Schiebetür zu erstrecken.

Es hat sich zudem herausgestellt, dass dem Nutzer bereits ein unterstützendes Aufschieben der Schiebetür über den ersten Teil ihres Öffnungsweges die Handhabung bereits deutlich erleichtert und dass ein weitergehendes Öffnen der Schiebetür den Bedienkomfort nur unwesentlich erhöht.

Besonders vorteilhaft ist es, wenn die Antriebsvorrichtung eine Synchronisations und/oder Vorbeschleunigungseinrichtung aufweist, die dazu ausgelegt ist, die ausgekoppelten Getriebeelemente bei einem Schließvorgang synchronisierend und/oder vorbeschleunigend miteinander in Eingriff zu bringen, da derart das Getriebe geschont und der Gleichlauf des Möbelteils verbessert wird. Des Weiteren wird durch das Vorbeschleunigen eine sanft startende Drehbewegung statt einer schlagartig einsetzenden Drehbewegung erreicht. Außerdem entstehen weniger Geräusche.

Besonders vorteilhaft zum Einsatz an einer Schiebetür ist es dabei, wenn die in und außer Eingriff bringbaren Getriebeelemente als ein drehbares Zahnrad und eine damit kämmende, linear verschiebliche Zahnstange ausgebildet sind, denn diese Elemente sind günstig und kompakt an einer Montagebasis (bzw. in einem Gehäuse) unterbringbar und können gut in und außer Eingriff gebracht werden.

In diesem Fall ist es vorteilhaft, wenn die Synchronisations- und/oder Vorbeschleunigungseinrichtung dazu ausgelegt ist, das Zahnrad bei einem Schließvorgang vor dem in Eingriff treten der Verzahnungen dieser Elemente vorzubeschleunigen, um derart die Getriebeanordnung insgesamt vor Beschädigungen insbesondere durch sehr schnell zugeworfene Schiebetüren zu schützen.

Die Kraftübertragung vom Abtrieb des Motors auf das Zahnrad kann insbesondere über ein Kegelradpaar erfolgen. Denkbar ist unter bestimmten Vorraussetzungen, keine Selbsthemmung, dass der Antrieb auch über ein Schneckengetriebe erfolgen kann. Es sind auch weitere Ausgestaltungen der Kraftübertragung vom Motor auf das Getriebe zur Betätigung der Schiebetür denkbar.

Die Befestigung der Antriebseinheit kann einerseits an der Schienenanordung z.B. der Führungsschiene oder dem Laufprofil des Möbels und anderseits direkt an der Deckplatte erfolgen. Außerdem kann sich die Antriebseinheit auf oder unter der Deckplatte befinden.

Vorzugsweise ist an der Zahnstange ein Zahnstangensegment verschieblich geführt, welches auch nach einem außer Eingriff gelangen der Zahnstange und des Zahnrades mit dem Zahnrad in Eingriff bleibt. Durch dieses einfache bauliche Mittel wird in besonders vorteilhafter Weise eine Synchronisierung der beiden außer Eingriff gelangenden Getriebeteile Zahnstange und Zahnrad erreicht.

Besonders vorteilhaft ist ferner an der Montagebasis (bzw. an dem Gehäuse) eine Steuerkurve ausgebildet oder angeordnet, in welche ein Stift eingreift, der an einem relativ zum Zahnrad drehbaren Laufwegbegrenzungsteil ausgebildet ist. Derart wird eine besonders einfache und präzise arbeitende alternative Ausgestaltung der Drehwinkelbgrenzungseinrichtung geschaffen. Kinematische Umkehrungen dieser Bauform sind denkbar. Eine translatorische Führung des Stiftes zur Ausbildung einer Laufwegbegrenzung ist ebenfalls denkbar.

Die Kraftübertragung vom Abtrieb des Motors auf das Zahnrad kann bevorzugt über ein Ritzel-Kronenradpaar erfolgen. Denkbar ist unter bestimmten Vorraussetzungen, keine Selbsthemmung, dass der Antrieb auch über ein Schneckengetriebe erfolgen kann. Es sind auch weitere Ausgestaltungen der Kraftübertragung vom Motor auf das Getriebe zur Betätigung des beweglichen Möbelteils denkbar.

Neben der Verwendung eines kapazitiven oder induktiven Linearwegsensors kann auch ein rotatorisches oder lineares Potentiometer zur Wegerfassung eingesetzt werden.

Das Zahnstangensegment übernimmt in der Antriebsvorrichtung eine Steuerfunktion und kann daher auch als Steuerzahnstange bezeichnet werden. Es steuert den korrekten Eingriff des Zahnrades in den Antriebsteil der Zahnstange beim wieder in Eingriff bringen des beweglichen Möbelteils mit der Antriebsvorrichtung. Die Steuerzahnstange bringt über eine Rippe am Zahnrad und einen Steuerstift auf der Steuerzahnstange das Antriebszahnrad mit der Zahnstange zahngenau wieder in Eingriff. Des weiteren dient diese Anordnung zur Vorbeschleunigung des Antriebes beim erneuten in Eingriff bringen der Zahnstange mit dem Zahnrad.

Nachfolgend wird die Erfindung unter Bezug auf die Zeichnung anhand von Ausführungsbeispielen näher beschrieben. Es zeigt:
- Fig. 1a-d: eine Draufsicht auf eine erste Antriebsvorrichtung ohne Motor, in vier aufeinander folgenden Betriebszuständen, wie sie beim Bewegen einer Schiebetür auftreten;
- Fig. 2a-e: eine Draufsicht auf Teile eines Getriebes für die Antriebsvorrichtung aus Fig. 1 in fünf aufeinander folgenden Betriebszuständen, wie sie beim Schließen einer Schiebetür auftreten;
- Fig. 3a-b: zwei Sprengansichten von einigen Getriebeelementen eines Getriebes für eine Antriebsvorrichtung;
- Fig. 4a-i: ein Möbel mit einer Antriebsvorrichtung mit Motor in verschiedenen Ansichten und Öffnungszuständen, teilweise in Detailansicht;
- Fig. 5a-e: eine Draufsicht auf eine weitere Antriebsvorrichtung in mehreren aufeinander folgenden Betriebszuständen, wie sie beim Bewegen einer Schiebetür auftreten;
- Fig. 6a-e: Ansichten der Anordnung der Antriebsvorrichtung an einer Führungsschiene eines Möbels
- Fig. 7: eine Draufsicht auf eine dritte Antriebsvorrichtung;
- Fig. 8a-b: eine Draufsicht auf Teile eines Getriebes und einer Sensorvorrichtung für die Antriebsvorrichtung aus Fig. 7 in zwei Betriebszuständen, wie sie beim Bewegen einer Schiebetür auftreten, und
- Fig. 9a-d: Diagramme, welche beispielhaft den Zusammenhang zwischen dem Motordrehmoment bzw. der Türgeschwindigkeit und dem Öffnungsweg der Schiebetür beim Öffnen und Schließen einer Schiebetür mit einer Antriebsvorrichtung nach Art der Fig. 7 veranschaulichen;
- Fig. 10a-d: verschiedene Betriebszustände beim Bewegen einer Schiebetür bei einem weiteren Ausführungsbeispiel;
- Fig. 11a-d: verschiedene Betriebszustände beim Bewegen einer Schiebetür gemäß dem Ausführungsbeispiel der Fig. 10;
- Fig. 12a-d: verschiedene weitere Betriebszustände des Ausführungsbeispiels der Fig. 10;
- Fig. 13a-d: verschiedene weitere Betriebszustände des Ausführungsbeispiels der Fig. 10;
- Fig. 14: eine Ansicht eines weiteren Ausführungsbeispiels im ausgefahrenen Zustand;
- Fig. 15a-b: eine Ansicht eines Ausführungsbeispiels gemäß Fig. 14 im ausgefahrenen Zustand;
- Fig. 16: eine Ansicht eines Ausführungsbeispiels gemäß Fig. 14 im eingefahrenen Zustand;
- Fig. 17a-b: eine Ansicht eines Ausführungsbeispiels gemäß Fig. 16 im eingefahrenen Zustand;
- Fig. 18: eine Explosionsdarstellung von Antriebskomponenten;
- Fig. 19a-b: zwei Ansichten eines weiteren Ausführungsbeispiels im ausgefahrenen Zustand;
- Fig. 20a-b: zwei Ansichten einer Zahnstangenanordnung;
- Fig. 21a-b: Ansichten zur Schwingungsdämpfung; und
- Fig. 22: eine Schnittansicht mit einem Dämpfungselement.

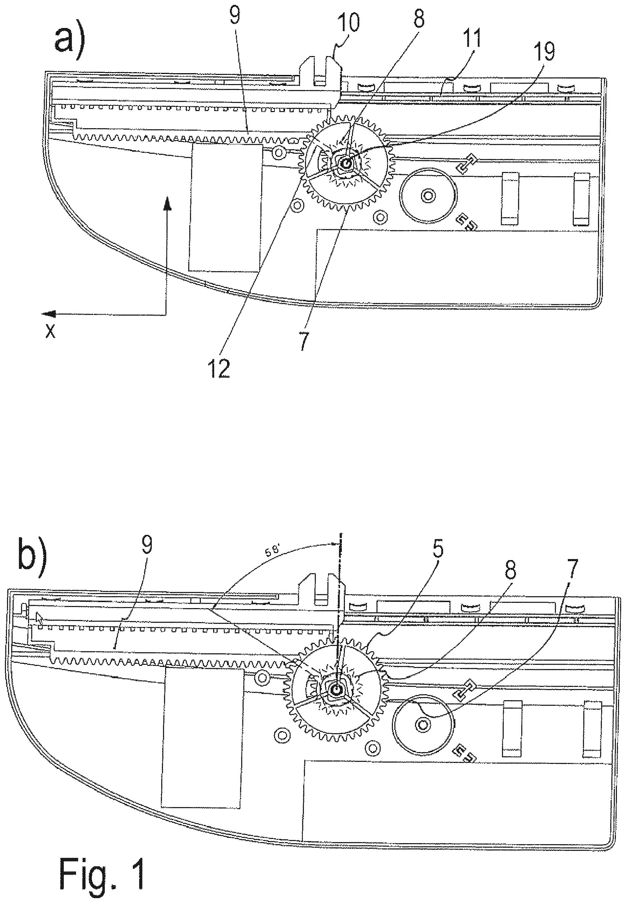

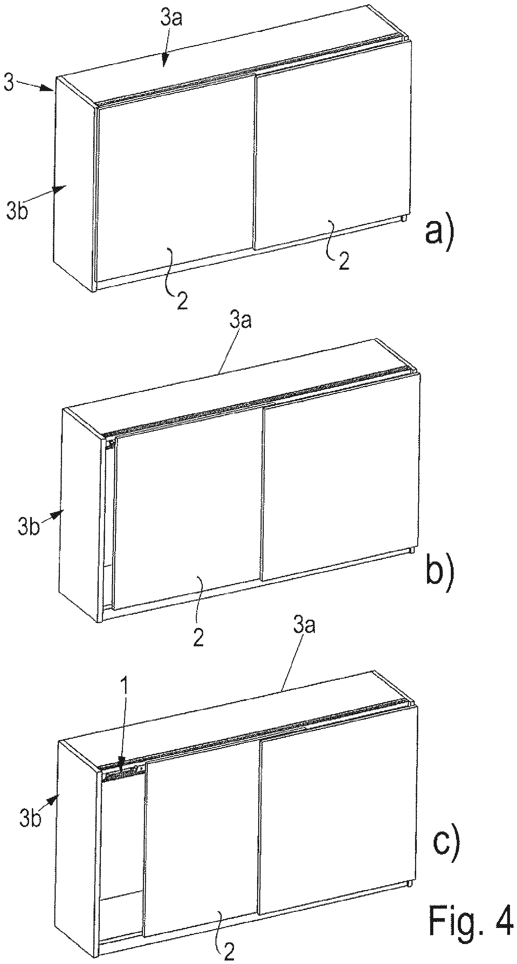

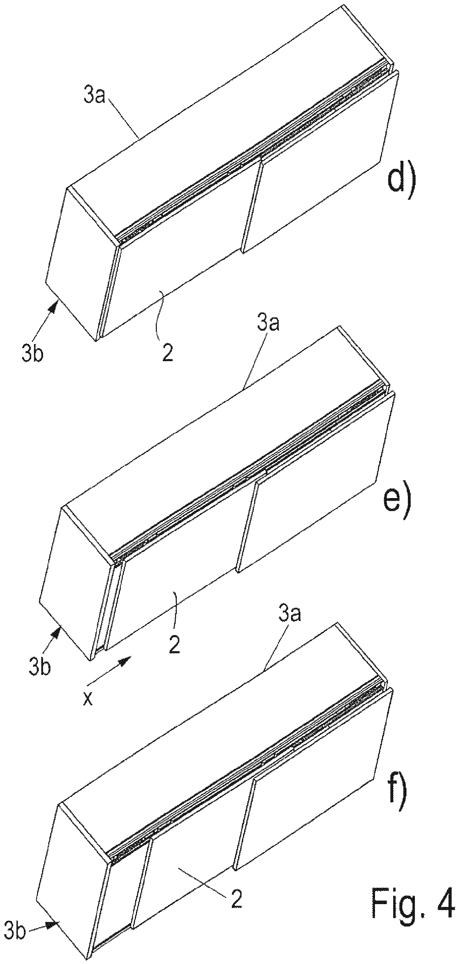

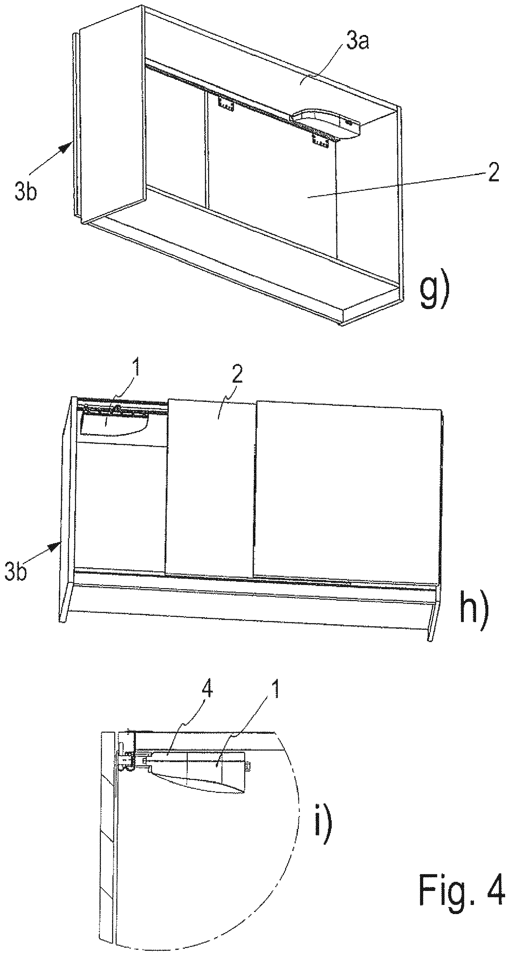

Die Figuren 1a bis c zeigen eine Antriebsvorrichtung 1 zum motorischen Bewegeninsbesondere zum Öffnen und/oder Schließen - beweglicher Möbelteile von Möbeln, die insbesondere zum Öffnen und/oder Schließen einer Schiebetür 2 an einem wenigstens eine oder mehrere der Schiebetüren 2 aufweisenden Möbel 3 ausgelegt ist (siehe Fig. 4).

Die Antriebsvorrichtung 1 weist eine Montagebasis 4 auf, die auch als Gehäuse ausgelegt sein kann, wobei sie dann vorzugsweise von einem hier nicht dargestellten Deckelteil verschlossen wird, und die an einem Möbelkorpus 3b des Möbels 3 befestigbar ist, und zwar vorzugsweise an oder in einer Grund- oder Deckplatte 3a des Möbelkorpus 3b.

Die Schiebetür 2 läuft in hier nicht im Detail zu erkennender Weise mit Rollen in einer Schienenanordnung des Möbels. Vorzugsweise ist jeder Schiebetür 2 jeweils eine der Antriebsvorrichtungen zugeordnet. Die Fig. 4a) bis 4c) und 4d) bis f) zeigen verschiedene Öffnungszustände jeweils einer der Schiebetüren 2 in verschiedenen Ansichten.

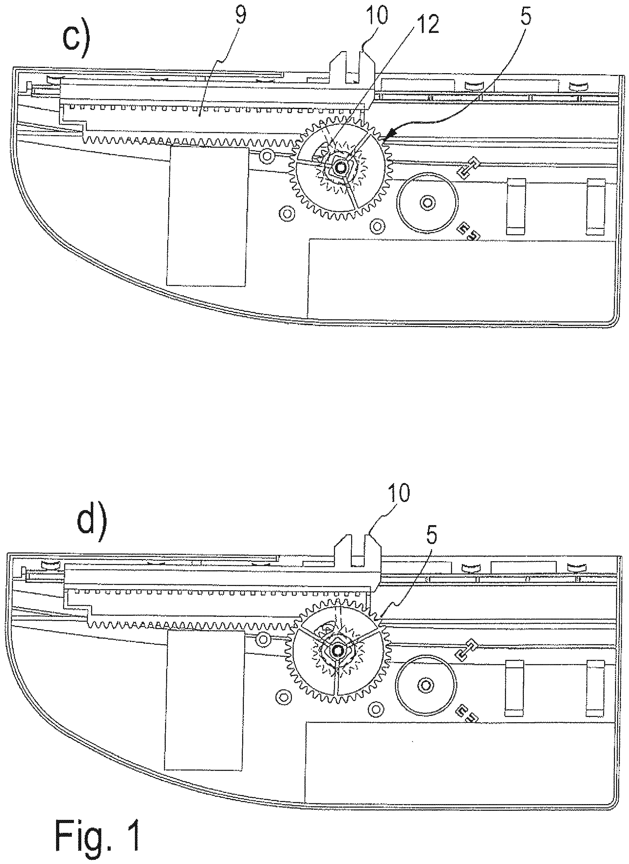

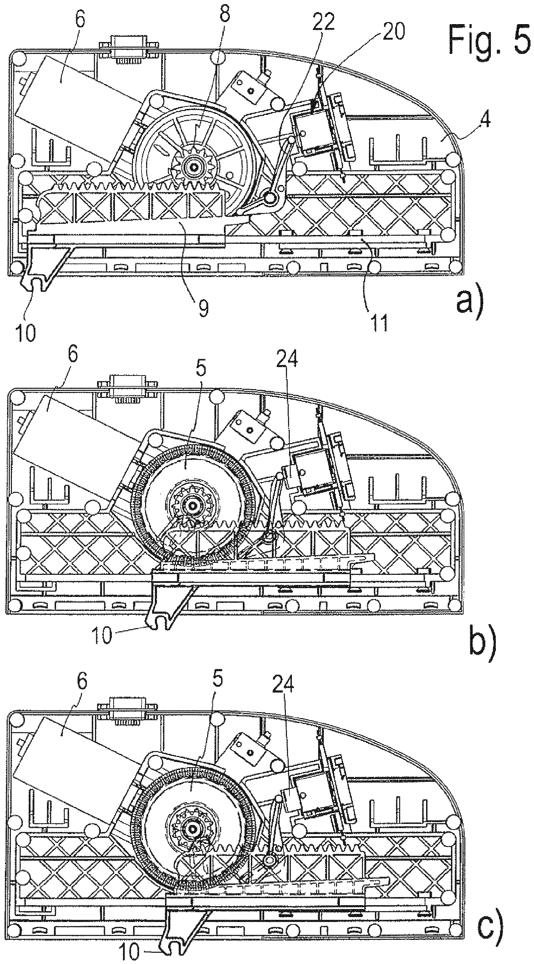

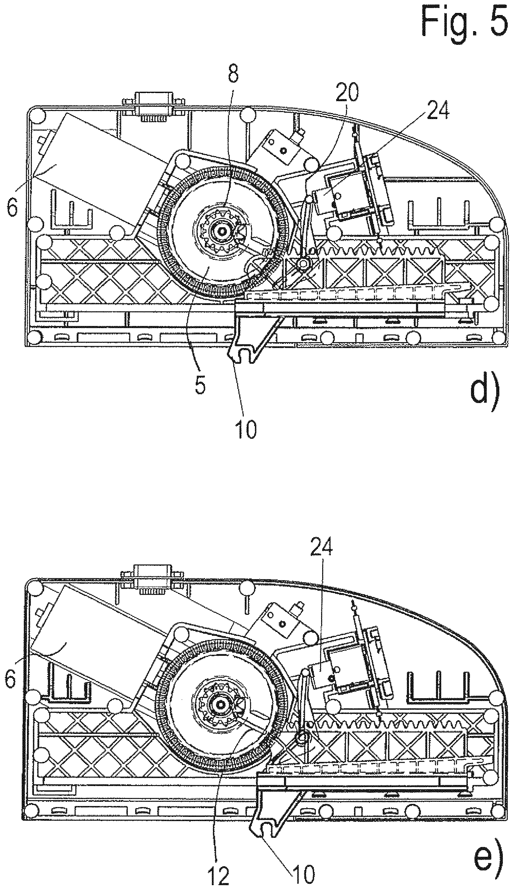

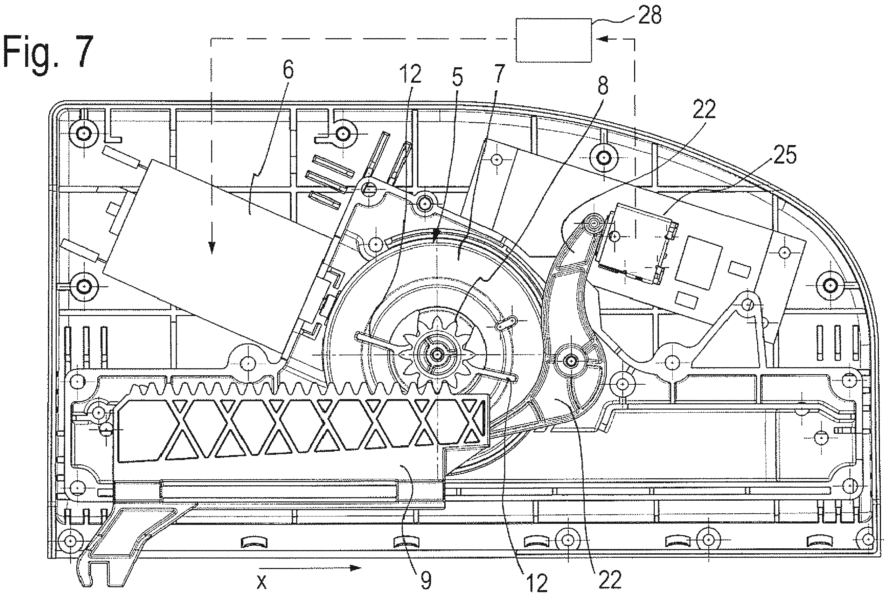

Auf der möbelseitig unbeweglich fixierten Montagebasis 4 (z.B. der Fig. 1) ist wenigstens ein Elektromotor 6 (nach Art der Fig. 5 oder 7) festgelegt, der z.B. über eine Getriebeanordnung die Schiebetür 2 beschleunigen oder abbremsen kann.

Der Elektromotor 6 ist dazu über Ritzel (hier nicht zu erkennen) und ggf. eine oder mehrere optionale - der Abtriebswelle vor- und/oder nachgeschaltete - Getriebeelemente mit einer Zahnradanordnung 5 gekoppelt.

Die Zahnradanordnung 5 weist ein drehbares - in Fig. 5 ähnlich eines Kronenrades - erstes Zahnrad 7 auf, auf dessen Achse 19 ein weiteres drehfest mit dem ersten Zahnrad 7 verbundenes weiteres Zahnrad 8 angeordnet ist, das auch einstückig mit dem ersten Zahnrad 7 ausgebildet sein kann und das über eine Außenverzahnung mit einer Verzahnung einer an der Montagebasis 4 verschieblich geführten Zahnstange 9 in Eingriff bringbar ist (siehe z.B. Fig. 1d).

Die Zahnstange 9 ist dazu ausgelegt, über eine Kopplungseinrichtung - die hier als gabelartiges Mitnehmerelement 10 ausgebildet ist - in welche ein korrespondierendes Antriebsglied - wie ein Zapfen 31 - des an der Schiebetür 2 angreifenden in einer Kurvenführung 30 geführten Mitnehmers 29 eingreift in Schieberichtung X bzw. Öffnungsrichtung positiv oder negativ beschleunigend, d.h. ggf. auch abbremsend, auf die Schiebetür 2 einzuwirken.

Die Grundfunktion dieses Antriebes ist wie folgt.

Wird der vorzugsweise als Gleichstrommotor ausgebildete Elektromotor 6 zur Rotation in entsprechender Drehrichtung bestromt, dreht sich die Zahnradanordnung 5 mit, welche wiederum die Zahnstange 9 verschiebt, welche die Schiebetür 2 aufschiebt. Derart wird die Schiebetür 2 aus der geschlossenen Stellung über einen Teil des maximal mit der Schiebetür 2 realisierbaren Schiebweges aufgeschoben. Bei einer Bestromung des Elektromotors 6 zur Drehung in entgegengesetzter Richtung erfolgt dagegen ein Schließen der Schiebetür 2.

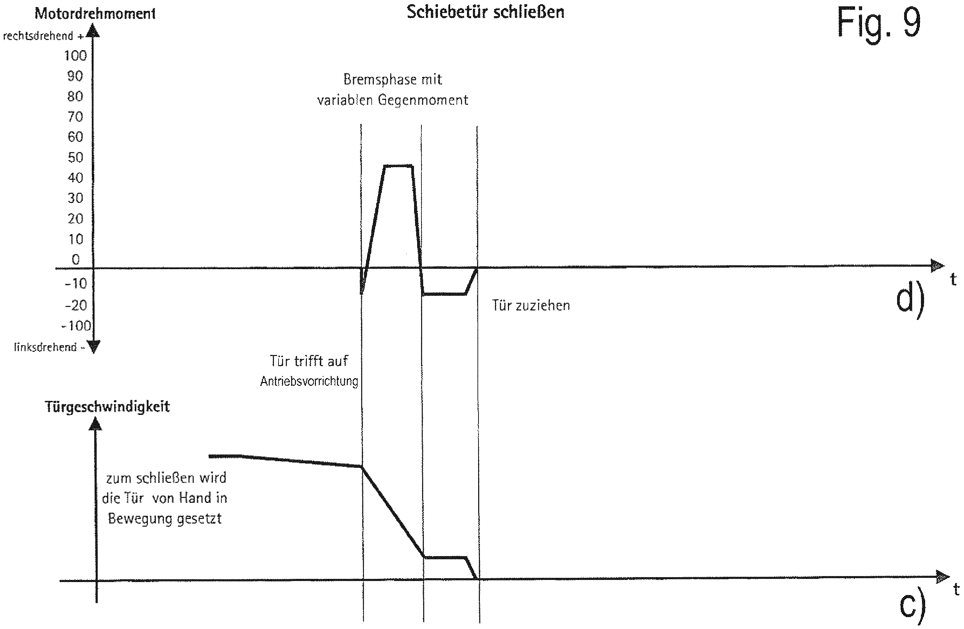

Mit Hilfe des Elektromotors 6 kann auch einer (zu) schnellen manuell eingeleiteten Schließbewegung bremsend entgegen gewirkt werden (Fig. 9c, d).

Die Antriebsvorrichtungen der Fig. 1 bis 8 sind vorzugsweise derart ausgelegt, dass die Zahnstange 9 und das mit ihr kämmende zweite Zahnrad 8 nach dem Überstreichen eines vorgegebenen Öffnungsweges - vorzugsweise deutlich vor dem Erreichen der End-Öffnungsstellung der Schiebetür 2 nach einigen cm Weg (z.B. in der Position der Fig. 4c) - außer Eingriff geraten.

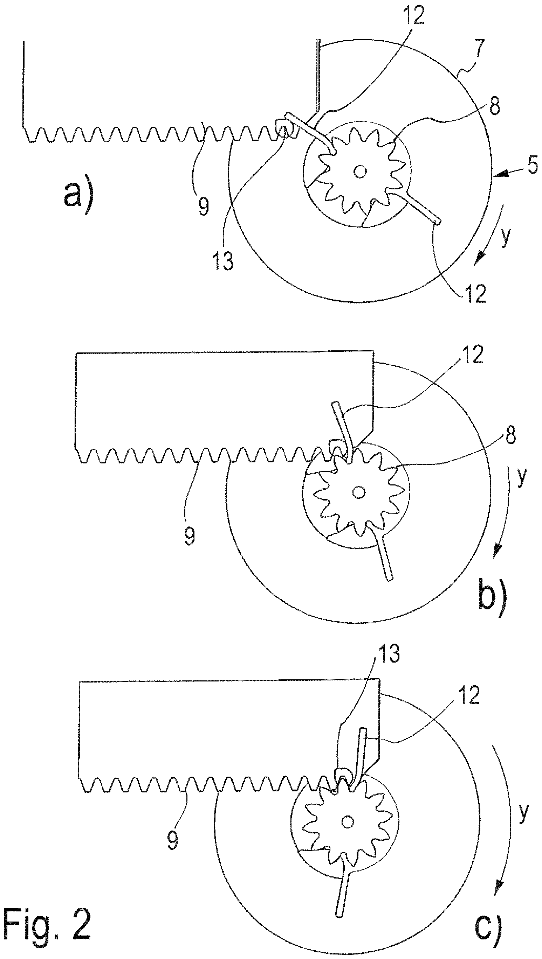

Die Figuren 2a bis e zeigen das wieder in Eingriff bringen der Zahnstange 9 mit dem zweiten Zahnrad 8 beim Schließen der Schiebetür 2. Die Drehrichtung Y zeigt die Drehrichtung der Zahnradanordnung 5 beim Schließvorgang. Bei der Annäherung der Zahnstange 9 wird das zweite Zahnrad 8 über den Vorsprung 13 und den Steg 12 wieder in Eingriff mit der Zahnstange 9 gebracht. Somit werden die Zahnstange 9 und das zweite Zahnrad 8 "zahngenau" wieder zusammengeführt. Des Weiteren wird über den Vorsprung 13 und den Steg 12 die Zahnradanordnung und somit auch der Motor 6 vorbeschleunigt, um ein sicheres und "sanftes" Eingreifen der Zahnstange 9 und dem zweiten Zahnrad 8 zu gewährleisten.

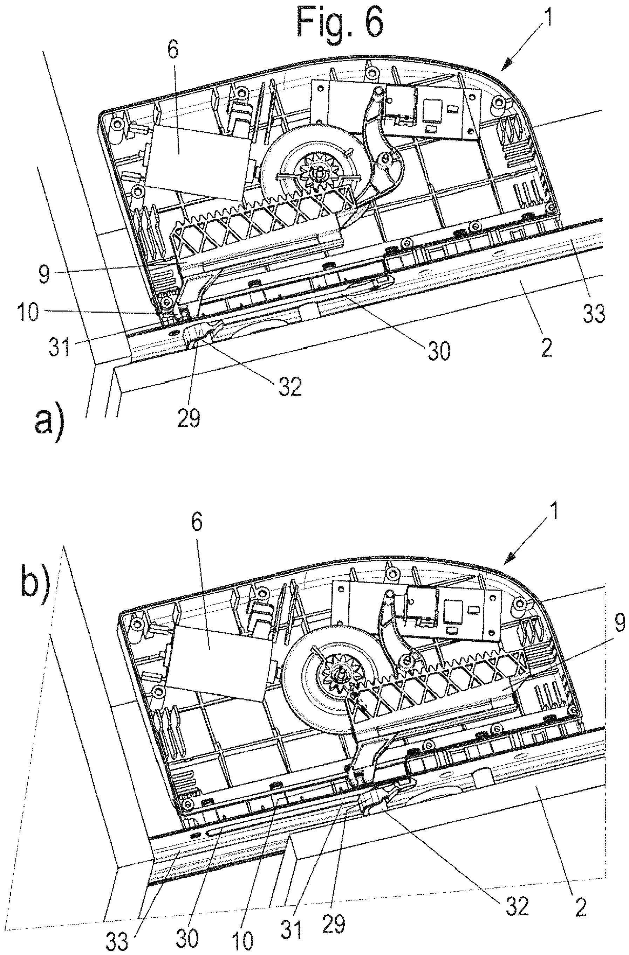

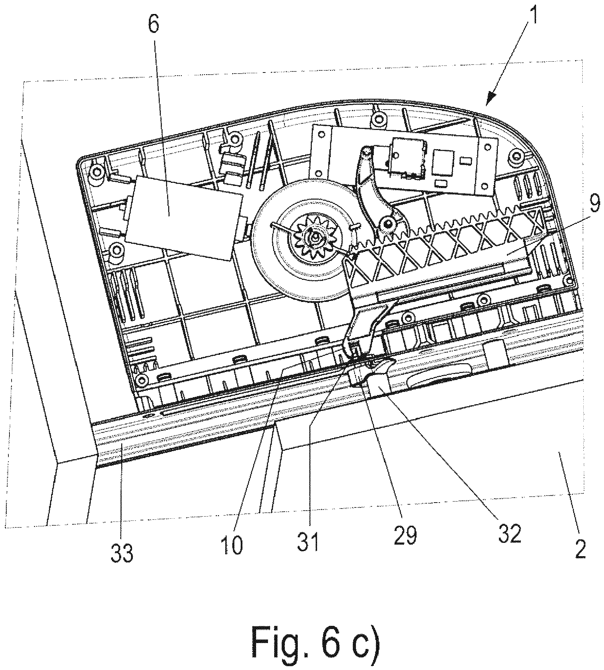

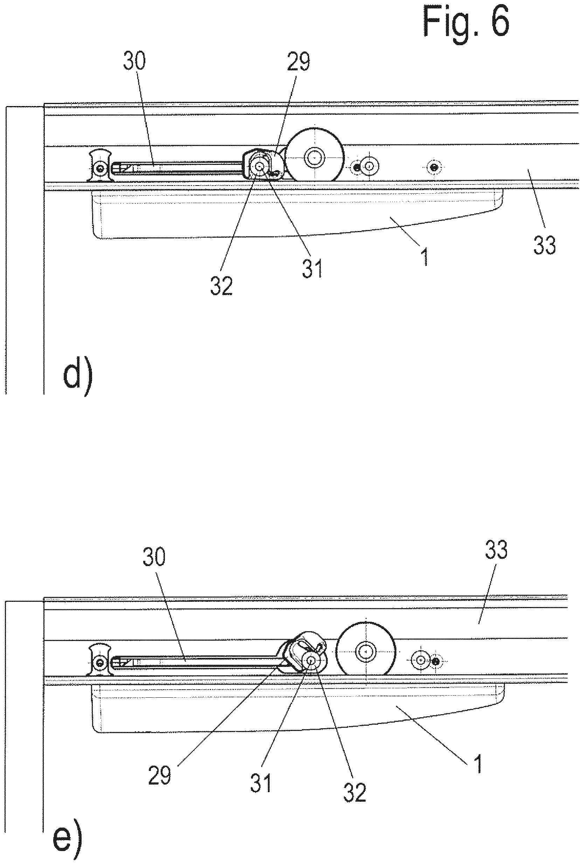

Gleichzeitig oder unmittelbar davor oder danach geraten auch die Schiebetür 2 und der Mitnehmer 29 an der mit dem an der Schiebetür 2 befestigten Übertragungsbolzen 32 außer Eingriff, was z.B. dadurch realisierbar ist, dass der Mitnehmer29 drehbar oder schwenkbar in einer Kurvenführung 30 geführt ist, so dass der an der Schiebetür 2 befestigte Übertragungsbolzen 32 nach Erreichen der maximalen Bewegungsstellung des Mitnehmers 29 in der Kurvenführung 30 aus dem Mitnehmer 29 austritt, wohingegen er beim Schließen wieder in den Mitnehmer 29 eintritt und über den Zapfen 31 das Mitnehmerelement 10 und die Zahnstange 9 mitnimmt, die dann wieder mit dem Zahnrad 8 in Eingriff gelangt (Figuren 6a bis e).

Die Zahnstange 9 kann beispielsweise zur Montagebasis 4 hin eine T-förmige Nut aufweisen, in welche eine sich parallel zur Schieberichtung X der Schiebetür erstreckende, korrespondierende Schienenkontur 11 an der Montagebasis 4 eingreift, so dass die Zahnstange 9 an der Montagebasis 4 verschieblich geführt ist. Alternativ können z.B. eine Nut in der Montagebasis und ein diese eingreifendes Schienstück an der Zahnstange 9 ausgebildet sein.

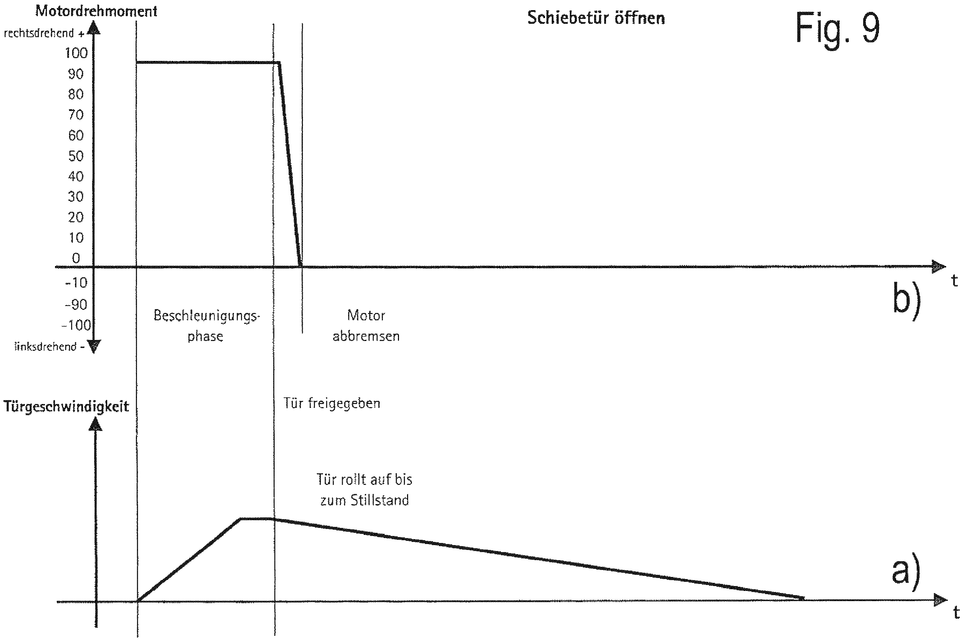

Die Schiebetür 2 kann sich über die mit der Zahnstange 9 und die Kurvenführung 30 maximal erreichbare Öffnungsstellung hinaus durch ihre eigene kinetische Energie nach dem Auskuppeln der Antriebsvorrichtung 1 weiter in der Führungsschiene 33 in die maximale Öffnungsstellung bewegen (Fig. 9a, b), wobei sie durch Reibung abgebremst wird oder manuell in diese Stellung verschoben werden kann. Nach dem Auskuppeln der Zahnstange wird der Elektromotor 6 abgebremst (Fig. 9a), der vorzugsweise zuvor konstant während der Öffnungsbewegung beschleunigt wurde; Fig. 9a, b). Derart kann die Schiebetür 2 auf einem nur kurzem Weg maximal beschleunigt werden.

Die vorstehend beschriebene Konstruktion bringt die Notwendigkeit mit sich, die Verzahnungen der Zahnstange 9 und des Zahnrads 8 beim Schließen wieder miteinander in Eingriff zu bringen.

Dies wird nach der Erfindung dadurch deutlich vereinfacht und erleichtert, dass an den Getriebeteilen Zahnrad 8 und Zahnstange 9 eine Synchronisations- und/oder Vorbeschleunigungseinrichtung angeordnet oder ausgebildet wird, die dazu dient, das Ineingriffbringen von Zahnstange 9 und Zahnrad 8 dadurch zu optimieren, dass die Zahnstange 9 bereits beginnt, das Zahnrad 8 in Drehung zu versetzen und zu beschleunigen, bevor die Zähne des Zahnrades 8 und der Zahnstange 9 miteinander in Eingriff gelangen.

Dies kann auf einfache Weise dadurch erreicht werden, dass am Zahnrad 7 ein nach außen über den Außenumfang der Verzahnung vorkragender Vorsprung, insbesondere Steg 12 vorgesehen ist - beispielsweise ein sich radial über den Umfang der Zähne hinaus erstreckender Steg 12, auf welchen ein Vorsprung 13 an der Zahnstange beim Schließen der Schiebetür 2 zunächst aufläuft, so dass das Zahnrad 7 in Drehung versetzt wird (Fig. 1a, 2a, b).

Der Steg 12 kann als Rippe an einer der Axialseiten des Zahnrades 5 ausgebildet sein.

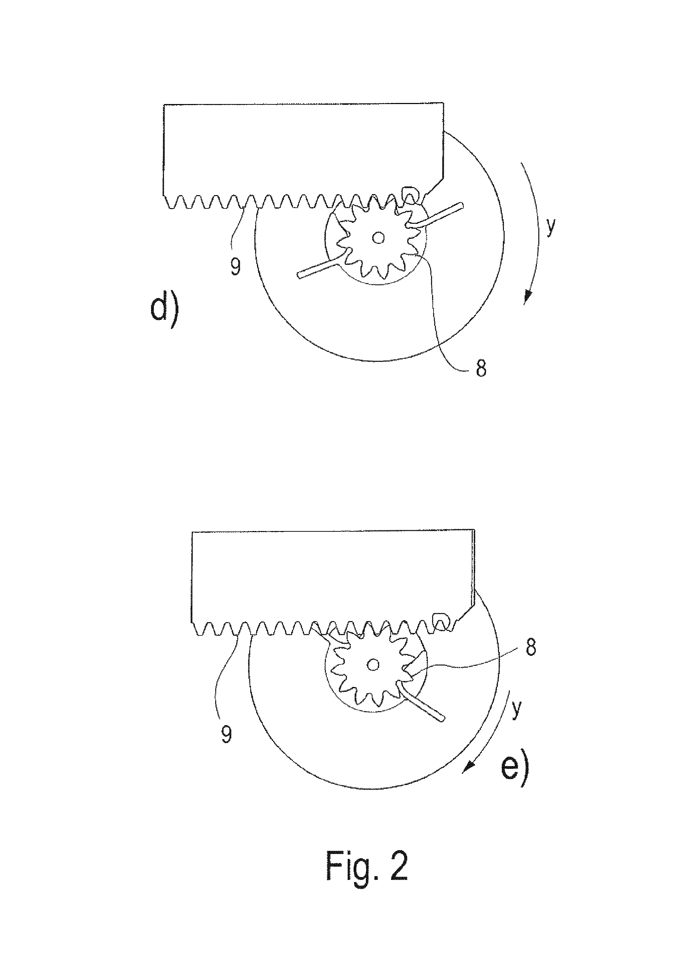

Eine unterstützende Synchronisierung zwischen den Verzahnungen an der Zahnstange 9 und an dem Zahnrad 8 wird erreicht, wenn der Steg 12 radial mit der Spitze von einem der Zähne des Zahnrades 8 fluchtet (Fig. 1) oder diesem etwas in Drehrichtung voreilend angeordnet ist (Fig. 2) und sich radial über diese Spitze hinaus erstreckt.

Derart werden die Zähne der Zahnstange 9 und des Zahnrades 7 problemlos miteinander in Eingriff gebracht, wenn sich die Zahnstange weiter in Richtung des Zahnrades bewegt und dieses schließlich erreicht(Fig. 1b; 2c).

Sodann kann der Motor beispielsweise bremsend auf die Schiebetür einwirken (Fig. 1c, 2d, e).

Das Vorbeschleunigen und Synchronisieren der Verzahnungen wirkt sich insbesondere auch vorteilhaft auf die Getriebelebensdauer aus, da das Getriebe mit der Erfindung nur langsam auf die hohe Geschwindigkeit beschleunigt wird, mit welcher sich die Schiebetür beim Schließen bewegt.

Der Elektromotor 6 kann auch dazu genutzt werden, die Schiebetür 2 nach dem Einkuppeln und nach dem ggf. erforderlichen anfänglichen Abbremsen in die maximal erreichbare Schließstellung zu ziehen (Fig. 1a, 8c, d).

Damit sichergestellt ist, dass sich das Zahnrad beim Schließen der Tür in einer geeigneten Drehwinkelstellung befindet, in welcher der Vorsprung in geeigneter Weise auf den radialen Steg trifft, kann ein Drehwinkelsensor an der Zahnradanordnung angeordnet sein, um deren Drehwinkelstellung zu ermitteln, und um dann mit dem Elektromotor 6 das Zahnrad nach dem Auskuppeln geeignet auszurichten.

Zur einfacheren Realisierung der Funktion des korrekten Ausrichtens des Steges 12 ohne einen zusätzlichen Sensor ist es aber vorteilhaft, die Zahnradanordnung 5 derart auszulegen, dass sie beim außer Eingriff bringen des Zahnrades 8 und der Zahnstange 9 stets in der gleichen, vordefinierten Drehstellung verbleibt.

Dies kann dadurch erreicht werden, dass an der Zahnradanordnung 5 Drehwinkelbegrenzungsmittel ausgebildet sind.

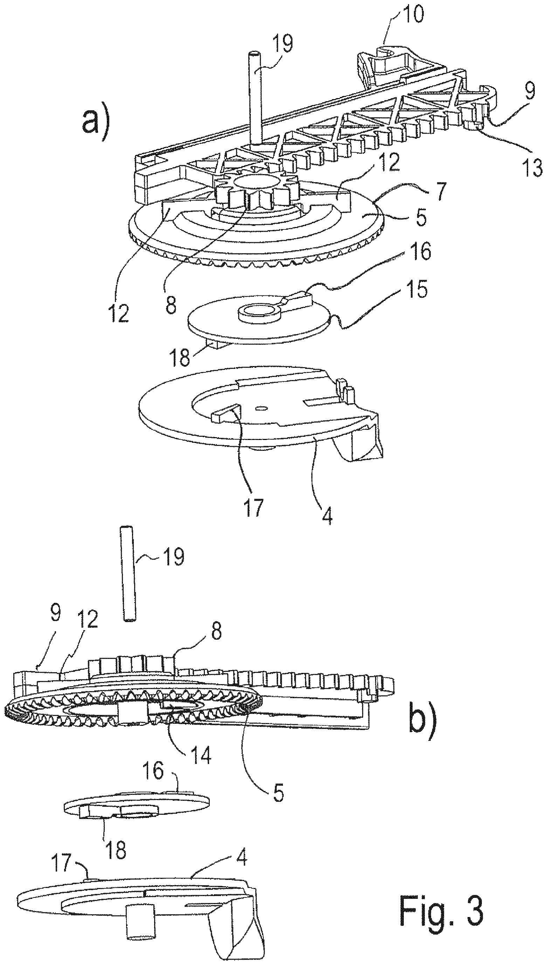

Diese Drehwinkelbegrenzungsmittel können einen Endanschlag 17 - z.B. eine radiale Rippe 17 am Gehäuse, insbesondere an der in Fig. 3 nur abschnittsweise dargestellten Montagebasis 4 - umfassen, an welchen ein korrespondierender Endanschlag - insbesondere eine korrespondierende radiale Rippe 14 an der zum Gehäuse, insbesondere zur Montagebasis gewandten Zahnradanordnung 5 dann oder kurz nachdem anschlägt, wenn die Zahnstange 9 mit dem Zahnrad außer Eingriff gelangt (Fig. 3a, b) bzw. gelangt ist.

Der Steg 12 und die Rippe 14 sind vorzugsweise an den voneinander abgewandten Axialflächen der Zahnradanordnung 5 ausgebildet.

Derart ist ein Drehwinkel von etwas weniger als 360° erreichbar.

Um einen größeren Drehwinkel überstreichen zu können, ist nach einer konstruktiv einfachen und kostengünstigen Variante der Erfindung eine frei drehbare Scheibe 15 auf der Achse der Zahnradanordnung 5 zwischen der Zahnradanordnung 5 und dem Gehäuse, insbesondere der Montagebasis 4 angeordnet, die an ihren einander gegenüberliegenden Axialseiten ebenfalls Anschläge, insbesondere Rippen 17, 18, aufweist, die derart angeordnet und ausgerichtet sind, dass sie jeweils in der einen oder anderen Drehrichtung gegen die korrespondierenden Anschläge/Rippen 13, 14 der Zahnradanordnung 5 und des Gehäuses anschlagen können. Derart ist der maximale überstreichbare Drehwinkel geeignet erhöhbar.

Maximal ist mit dieser Scheibe 15 eine Erhöhung des Drehwinkels um knapp weniger als 360° zu erzielen (wegen der nicht vernachlässigbaren Umfangserstreckung der Rippen 15, 18). Durch 1 bis n weitere, analog ausgebildete, frei drehbare Scheiben (hier nicht dargestellt) mit Anschlägen bzw. Rippen kann der erreichbare Drehwinkel weiter erhöht werden.

Derart kann auf einfache Weise auf ein Sensieren und Ansteuern der geeigneten Position des Doppelzahnrades (Zahnradanordnung 5) nach dem außer Eingriffgelangen des Zahnrades 8 und der Zahnstange 9 verzichtet werden.

Um den Elektromotor 6 geeignet ansteuern zu können, ist es weiter vorteilhaft, die Absolutposition der Zahnstange 9 bzw. der mit dieser gekoppelten Schiebetür 2 bestimmen zu können.

Dies kann beispielsweise mit Hilfe einer Sensoreinrichtung 20 zur Sensierung der Position der Zahnstange 9 in Schieberichtung realisiert werden.

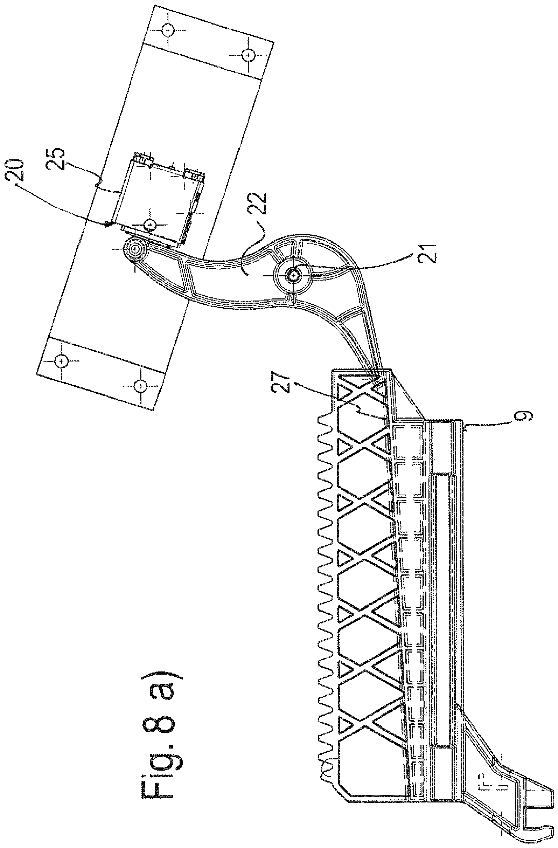

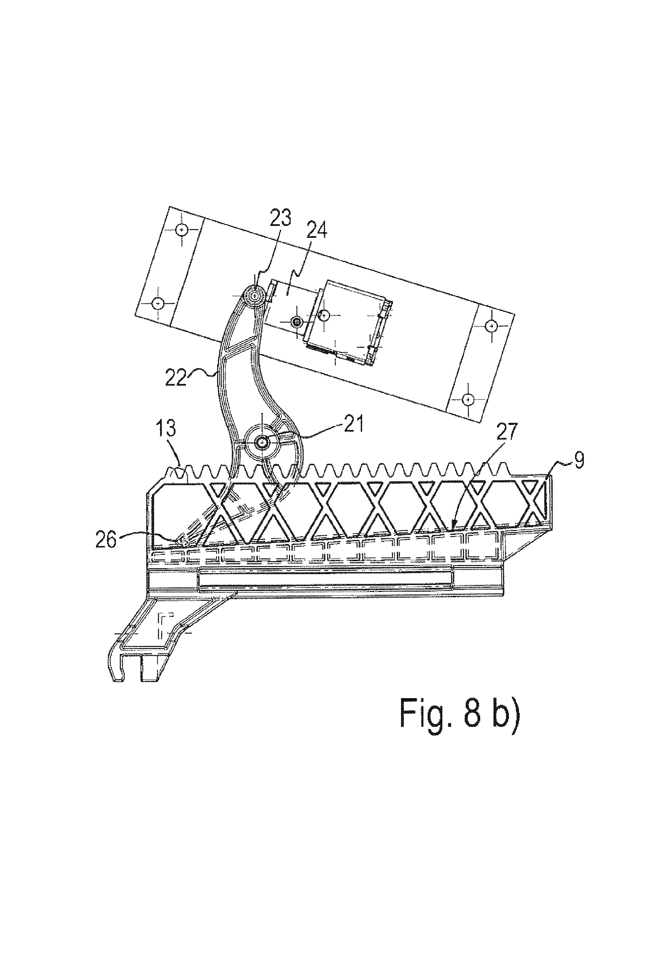

Besonders vorteilhaft wird diese Sensoreinrichtung nach einer Ausführungsform der Erfindung mit folgenden Mitteln realisiert (siehe Fig. 7 und 8).

Danach weist die Sensoreinrichtung 20 einen an einer Achse 21 seitlich neben der Zahnradanordnung 5 drehbar gelagertes Drehhebelelement 22 auf, auf dessen einem Ende 23 ein federvorbelastetes Schubelement 24 eines kapazitiven oder induktiven wirkenden Linearwegsensors 25 einwirkt und dessen anderes Ende 26 stets an einer relativ zur Schieberichtung X winklig ausgerichteten Kante 27 der Zahnstange 9 anliegt.

Wenn die Kante 27, an der das Drehhebelelement 22 anliegt beim Schließen der Schiebetür 2 durch eine Bewegung der Zahnstange wandert, bewegt sie das Drehhebelelement 22 gegen die auf das Schubelement 24 einwirkende Federkraft. Wird die Zahnstange 9 (z.B. in Fig. 8 weiter nach rechts) weiter verschoben, wird das Schubelement 24 entsprechend (z.B. in Fig. 8 weiter nach links bewegt).

Das Schubelement 24 ist z.B. als ein Strom induzierendes Element an einem Induktivsensor oder dgl. ausgebildet oder als ein die Kapazität änderndes Element an einem Plattenkondensator.

Derart ist die Absolutposition der Zahnstange 9 jedenfalls über einen bestimmten Weg einfach sensierbar und es ist ein eindeutiger Zusammenhang zwischen der Stellung des Schubelementes und der Position der Zahnstange gegeben bzw. sensierbar, der zur Steuerung der Antriebsvorrichtung nutzbar ist.

Fig. 9 zeigt, dass die Tür mit der dargestellten Antriebsvorrichtung zunächst vorzugsweise durch konstante Bestromung des Elektromotors 6 nahezu linear beschleunigt wird, bis die Zahnstange 9 und das Zahnrad 6 außer Eingriff gelangen.

Sodann wird der Elektromotor 6 abgebremst und die Schiebetür 2 rollt aus, und zwar vorzugsweise bis in ihre maximal erreichbare Endstellung (Fig. 9a, b).

Das Schließen der Schiebetür 2 erfolgt zunächst manuell durch eine Person. Sodann gelangen die Zahnstange 9 und das Zahnrad 8 wieder in Eingriff, was mit der Sensoreinrichtung (20) ermittelt wird. Jetzt kann der Motor 6 (wenn die Schiebetür zu schnell geschlossen wird) ggf. bremsend wirken und/oder - z.B. nach einem anfänglichen Bremsen der Schiebetür - das Zuziehen unterstützen. Die bremsende Wirkung kann bei stromlosen und / oder bestromten Motor sogar verstärkt erfolgen.

Die Bremswirkung eines stromlosen Motor (eigentlich dann Generator) besteht nur aus mechanischer Reibung. Wird der Motor (Generator) kurzgeschlossen entsteht ein elektrisch erzeugtes Bremsmoment. Wird der Motor mit einem Strom beaufschlagt der ein dem Lastdrehmoment entgegengesetztes Moment erzeugt, kann ein erheblich höheres Bremsmoment erzeugt werden (in Fig. 9 dargestellt).

Vorzugsweise bremst der Motor 6 die Tür erst ab und zieht sie dann langsam in ihre Schließstellung. Hierzu ist eine geeignete Steuereinrichtung 28 mit der Sensoreinrichtung 20 und dem Elektromotor 6 zu verbinden, die in das Gehäuse integrierbar ist, was schematisch in Fig. 7 dargestellt ist.

Die dargestellte Antriebsvorrichtung eignet sich nicht nur zum Öffnen und Schließen von Schiebetüren sondern auch zum Aufschieben und Schließen von rollengelagerten beweglichen Teilen von Möbeln.

Zur Betätigung der Antriebsvorrichtung zum Öffnen der Schiebetür 2 muss die Schiebetür 2 um einen geringen Auslöseweg durch den Bediener vorzugsweise in Öffnungsrichtung oder alternativ in Schließrichtung bewegt werden. Diese Bewegung wird über den Linearwegsensor registriert und führt zum Auslösen der Antriebsvorrichtung.

Somit wird das Öffnen der Schiebetür 2 vorteilhaft durch einen geringen Druck auf die Schiebetür 2 in Öffnungsrichtung gestartet. Durch den Druck auf die Schiebetür bewegt sich diese eine kurze Strecke (vorzugsweise ca. 1 mm), sodass die Steuerungselektronik diese Bewegung erkennen kann und eben als Öffnungsbefehl interpretiert. Weiterhin ist vorgesehen, dass die Steuerung so ausgelegt ist, dass ein externes Eingangssignal von z.B. einem Funkschalter, einem von Hand betätigten Taster oder anderen dem Stand der Technik entsprechenden Befehlsgeräten verarbeitet werden kann.

Außerdem kann die Steuerung vorzugsweise ein Ausgangssignal abgeben, mit dessen Hilfe z.B. eine Beleuchtung im Schrank eingeschaltet werden kann, aber auch andere sinnvolle Einrichtungen eingeschaltet werden können.

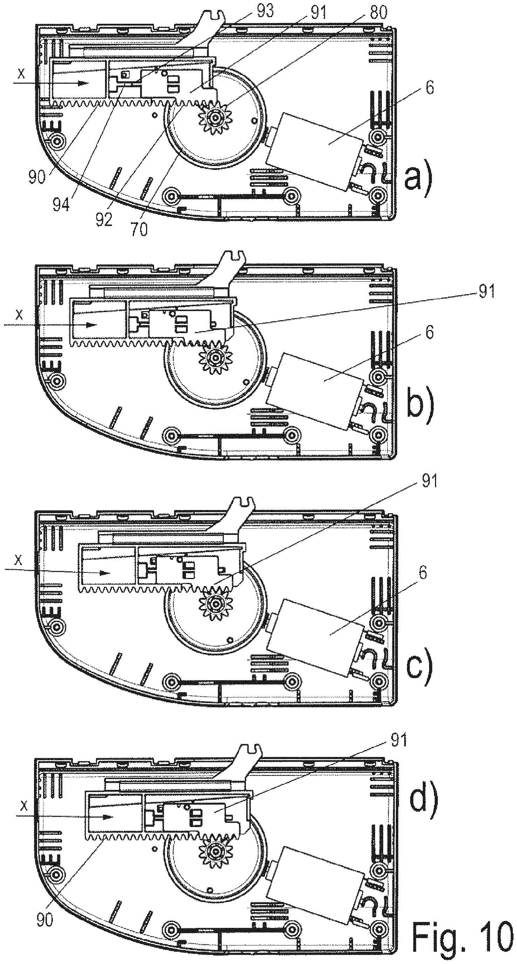

Die Fig. 10 a) bis d), 11 a) bis d), 12 a) bis d) sowie 13 a) bis d) zeigen verschiedene Ansichten und Betriebszustände eines weiteren Ausführungsbeispiels der Erfindung.

Auch nach Fig. 10 ist die Antriebsvorrichtung 1 zum motorischen Bewegen- insbesondere zum Öffnen und/oder Schließen - beweglicher Möbelteile von Möbeln, die insbesondere zum Öffnen und/oder Schließen einer Schiebetür 2 an einem wenigstens eine oder mehrere der Schiebetüren 2 aufweisenden Möbel 3 ausgelegt (siehe Fig. 4).

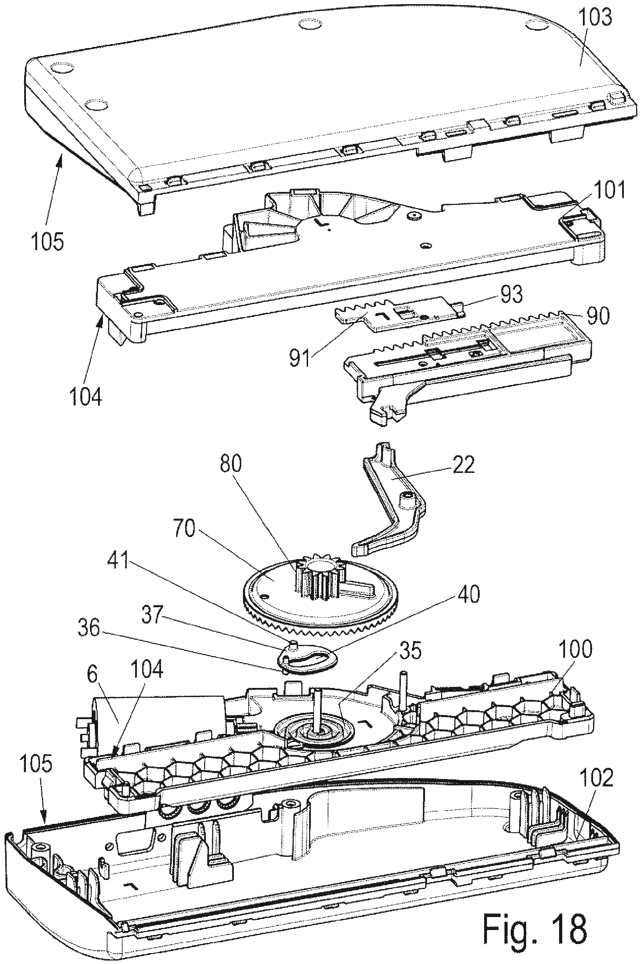

Sie weist ferner wiederum die Montagebasis 4 auf, die an dem Möbelkorpus 5 des Möbels 3 befestigbar ist (siehe insbesondere wiederum Fig. 4 sowie Fig. 18).

Auch hier ist der Elektromotor 6 dazu z.B. über der Abtriebswelle vor- und/oder nachgeschaltete - Getriebeelemente drehbar mit einer Zahnradanordnung 5 gekoppelt.

Die Zahnradanordnung 5 weist ein drehbares - in Fig. 5 stirnverzahntes - erstes Zahnrad 7 auf, auf dessen Welle 19 ein weiteres drehfest mit dem ersten Zahnrad 7 verbundenes weiteres Zahnrad 80 angeordnet ist, das auch einstückig mit dem ersten Zahnrad 7 ausgebildet sein kann und das über eine Außenverzahnung mit einer Verzahnung einer an der Montagebasis 4 verschieblich geführten Zahnstange 90 in Eingriff bringbar ist.

Die Zahnstange 90 ist wiederum dazu ausgelegt, über eine Kopplungseinrichtung in Schieberichtung bzw. Öffnungsrichtung X positiv oder negativ beschleunigend, d.h. ggf. auch abbremsend, auf die Schiebetür 2 einzuwirken.

Auch hier weist die Getriebeanordnung die zwei nach einem vorgegebenen Schiebeweg des Möbelteils, insbesondere der Schiebetür, außer Eingriff gelangende und bei einem darauf folgenden Schließen des Möbelteils, insbesondere der Schiebetür, erneut miteinander in Eingriff gelangenden, Getriebeelemente 80, 90, bei denen es sich um die Zahnstange 90 und das Zahnrad 80 handelt.

Anders als nach Fig. 9 ist aber an der verschieblichen Zahnstange 90 ein wiederum relativ zur Zahnstange 90 und zur Montagebasis 4 relativ bewegliches Zahnstangensegment 91 verschieblich geführt, welches auch nach dem außer Eingriff gelangen der Zahnstange 90 und des Zahnrades 81 mit dem Zahnrad 80 in Eingriff bleibt.

Das Zahnstangensegment 91 weist hier beispielhaft sechs Zähne 92 auf, die an einer Basis 93 ausgebildet sind, welche verschieblich an der Zahnstange geführt ist. Dies kann beispielsweise dadurch realisiert werden, dass die Basis 93 mit einem T-Stück-Ansatz (siehe Fig. 18) in eine schienenartige Ausnehmung 94 der Zahnstange 90 eingreift, wobei die schienenartige Ausnehmung 94 parallel zur Schieberichtung X ausgerichtet ist und wobei derart bemessen ist, dass sich das Zahnstangensegment beim Schließen der Schiebetür seitlich in Schieberichtung X mit einem Teil seiner Zähne 92 über den letzten Zahn der Zahnstange hinaus bewegen kann, wobei aber andererseits einige der Zähne des Zahnstangensegmentes 91 und der Zahnstange 90 miteinander in Deckung verbleiben.

Die Funktion dieser Anordnung ist wie folgt.

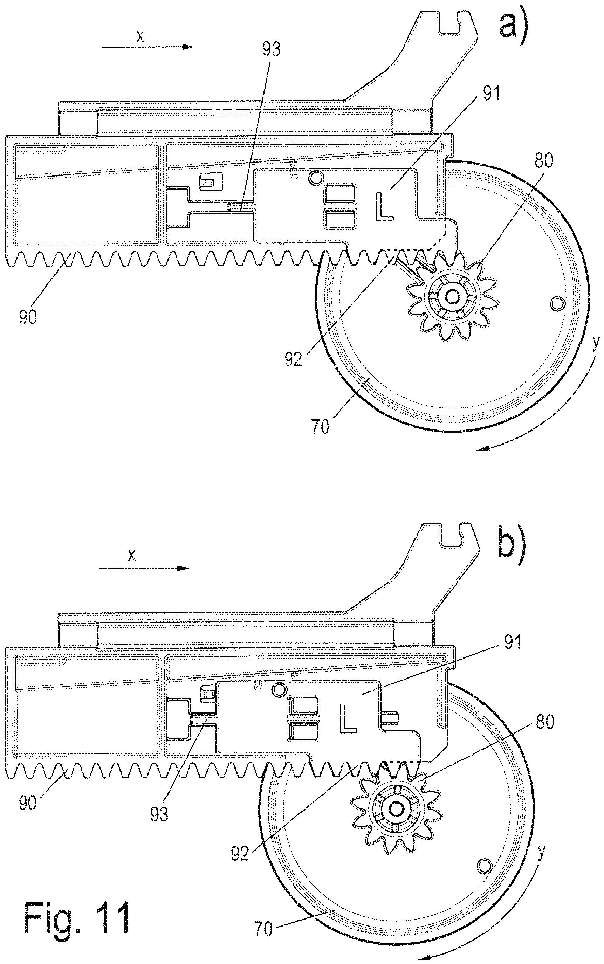

Wird das bewegliche Möbelteil (insbesondere eine Schiebetür) von Hand geschlossen (in Richtung -X), bewegt sich die Zahnstange 90 (mit dem Zahnsegment 91) nach rechts. Dabei verschiebt sich zunächst das mit dem Zahnrad 80 in Eingriff befindliche Zahnstangensegment 91 relativ zur Zahnstange 90 gegen die Richtung X (Fig. 10a, b u. Fig. 11a, b), bis das Zahnrad 81 auf den ersten Zahn der Zahnstange 90 aufläuft (Fig. 10b u. Fig 11b). Jetzt bewegt sich das Zahnstangensegment gemeinsam mit der Zahnstange 90 (Fig. 10c, 10d u. 11c, 11d).

Da sich stets Zähne des Zahnstangensegmentes 91 und der Zahnstange 90 in Deckung befinden, wird sichergestellt, dass die Zahnstange 90 und das Zahnrad 80 sicher wieder in Eingriff gelangen.

Durch das Zahnstangensegment 91 wird eine Synchronisationseinrichtung geschaffen, die dazu ausgelegt ist, die ausgekoppelten Getriebeelemente Zahnrad 80 und Zahnstange 90 synchronisierend wieder miteinander in Eingriff zu bringen.

Ergänzend kann das bewegliche Zahnstangensegment 91 mit einer Vorbeschleunigungsvorrichtung in Form eines über den Außenumfang des Zahnrades 8 radial vorstehenden Stegs kombiniert werden, wie er z.B. nach Fig. 2 vorgesehen ist.

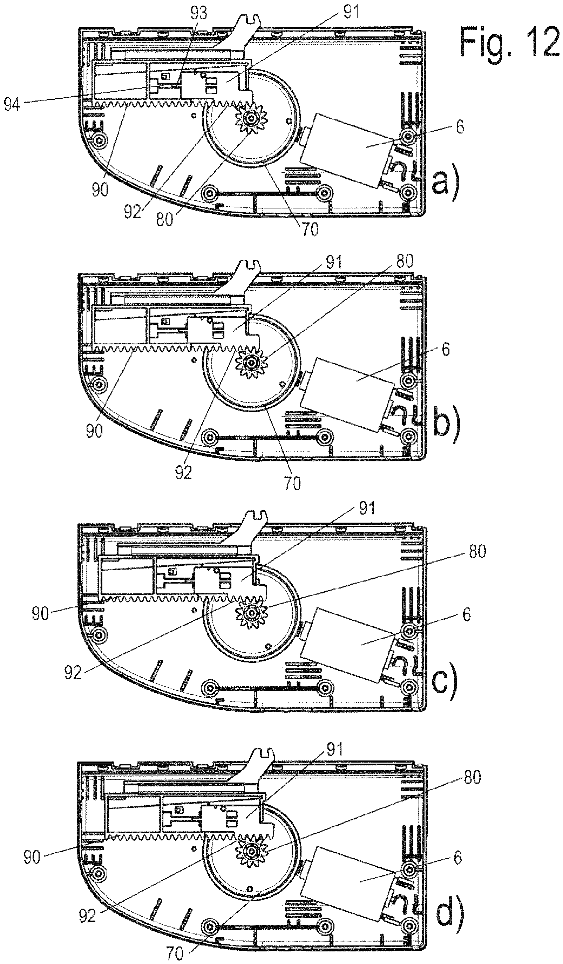

Nach Fig. 12a bis d u. 13a bis d wird dargestellt, wie sich die Anordnung dann verhält, wenn versucht wird, die Schiebetür mit dem Elektromotor zuzuziehen. In diesem Fall wird das bewegliche Zahnstangensegment 91 erst einen Zahn weiter in der Schließrichtung (Tür-Zu-Richtung) verschoben bzw. gezogen (Fig. 12a, 12b u. 13a, 13b), bis es an der Zahnstange 90 an einen Anschlag gelangt. Jetzt verschieben sich das Zahnstangensegment 91 und die Zahnstange 90 wieder gemeinsam und werden vom angetriebenen Zahnrad 90 in die Geschlossenstellung verschieben (Fig. 12a bis 12d u. 13a bis 13d).

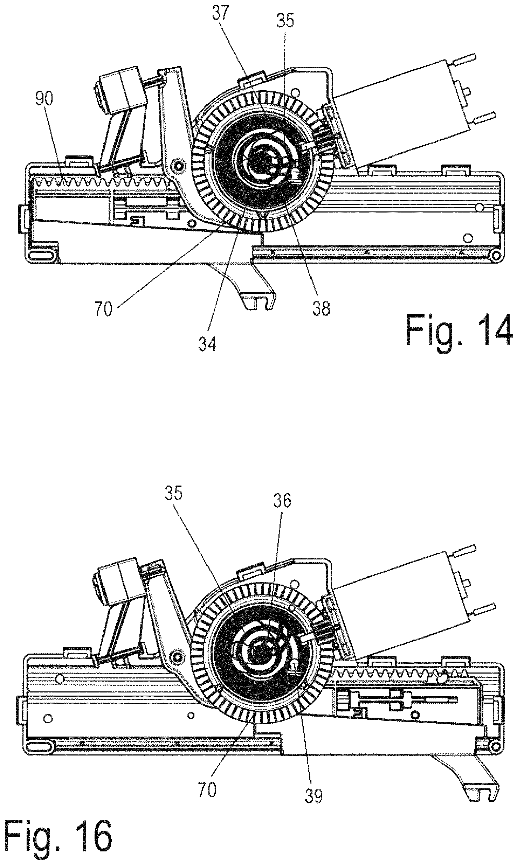

Nach Fig. 14 bis 17 werden alternative Drehwinkelbegrenzungsmittel offenbart.

Danach wird an der Montagebasis 4 bzw. an dem Gehäuse) eine Steuerkurve ausgebildet oder angeordnet ist.

Dies ist einfach dadurch realisierbar, dass an der Montagebasis oder am Gehäuse eine Platte 34 festgelegt ist, die mit einer Steuerkurve 35 versehen ist.

Vorzugsweise ist die Steuerkurve 35 als spiralkurvenartige, schlitzförmige Bahn in der Platte 34 ausgebildet, in welche ein Stift 36 eingreift, der an einem relativ zum Zahnrad 70 drehbaren Laufwegbegrenzungsteil 37 ausgebildet ist. Damit sich der Stift in der Bahn bewegen kann, kann am Zahnrad 70 ein Langloch 38, insbesondere in Bogenform, ausgebildet sein. Ein weiteres Langloch 40 ist im Laufwegbegrenzungsteil 37 ausgebildet. Das Laufwegbegrenzungsteil ist drehbar am Zahnrad 70 gelagert, sodass das Langloch 40 um die Achse 19 verschieblich ist. Das Laufwegbegrenzungsteil 37 ist schwenkbar um die Achse 41 gelagert, deren Lagerung am Zahnrad 70 angeordnet ist.

Vorzugsweise wird mit der Spiralbahn die Drehbarkeit auf ca. 2,2 Umdrehungen begrenzt.

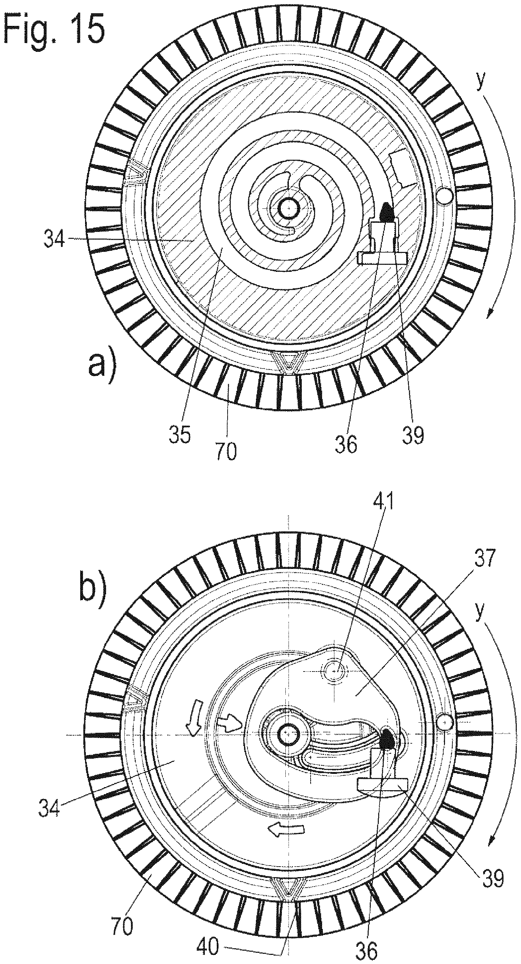

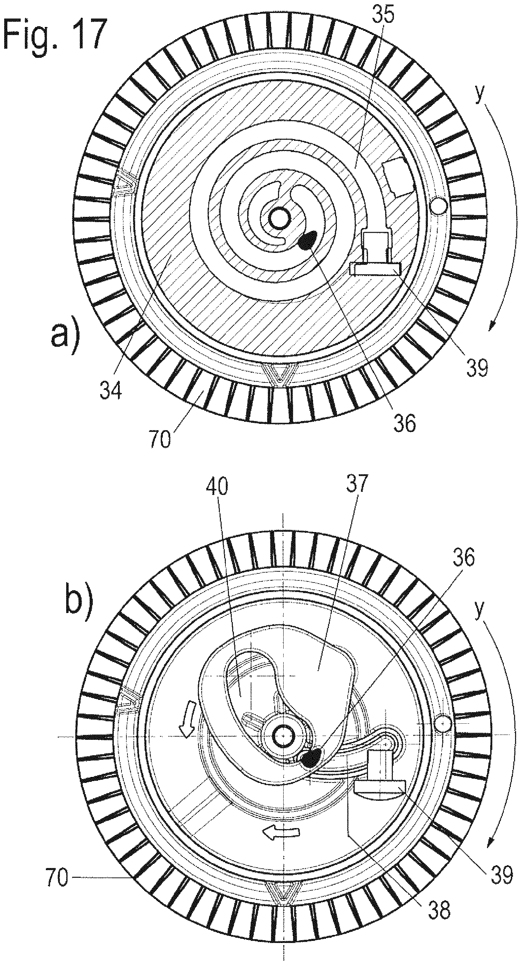

Diese Drehwinkelbegrenzungsmittel sind baulich einfach und arbeiten dennoch besonders präzise. Die Fig. 14 und 16 zeigen jeweils die maximalen Drehstellungen. Hierbei zeigen die Fig. 14 sowie die Fig. 15a und 15b den maximal ausgefahrenen Zustand der Zahnstange 90. Die Fig. 16 sowie die Fig. 17a und 17b zeigen den maximal eingefahren Zustand der Zahnstange 90. Der Anschlag 39 in Fig. 15a und 15b begrenzt die über die Steuerkurve 35 definierte zulässige Drehbewegung in Ausfahrrichtung.

Die Figur 18 zeigt eine weitere mögliche Ausgestaltung einer Antriebsvorrichtung und deren Komponenten. Ein Gehäuseunterteil 102 sowie ein Gehäuseoberteil 103 umschließen die Antriebsvorrichtung.

In einem Innengehäuseunterteil 100 ist die Steuerkurve 35 ausgebildet. Ein Innengehäuseoberteil 101 umschließt die Komponenten Laufwegbegrenzungsteil 37, Zahnrad 80, Drehhebelelement 22, Zahnstange 90, Zahnstangensegment 91 sowie den Elektromotor 6.

Das Innengehäuse 104, gebildet aus dem Innengehäuseunterteil 100 und dem Innengehäuseoberteil 101, ist schwimmend in dem Außengehäuse 105, gebildet aus dem Gehäuseunterteil 102 und dem Gehäuseoberteil 103, gelagert.

Es ist vorteilhaft, dass bzw. wenn derart ein erster Gehäuseteil bzw. ein erstes Gehäuse - hier das Außengehäuse 105 mit dem Gehäuseunterteil 102 und dem Gehäuseoberteil 103 - und ein weiterer Gehäuseteil - hier das Innengehäuse 104 mit den eigentlichen mechanischen Antriebskomponenten, gebildet aus dem Innengehäuseunterteil 100 und dem Innengehäuseoberteil 101, geschaffen werden, die schwingungstechnisch voneinander entkoppelt sind.

Vorzugsweise nimmt das innere Gehäuse 104 eines oder mehrere, insbesondere sämtliche, Getriebe- und Antriebsteile auf, wie die Zahnräder, den Motor und/oder den Wegsensor.

Das äußere Gehäuse 105 nimmt hingegen das innere Gehäuse 104 auf und vorzugsweise eine Elektronik-Platine. Ein besonderer Vorteil der zwei Gehäuse 104, 105 besteht darin, dass hierdurch die Elektronik vor dem (geschmierten) Getriebe geschützt ist und dass Getriebegeräusche durch die doppelte Hülle weniger nach außen dringen.

Um die Geräuschminderung zu optimieren, ist es notwendig, zu verhindern, dass der Körperschall des inneren Gehäuses 104 sich direkt in das äußere Gehäuse 105 fortsetzen bzw. übertragen kann. Vom Außengehäuse 105 könnte sich der Schall sonst auf die Schiene der Führungsanordnung und auf den Möbelkorpus übertragen. Insbesondere der Möbelkorpus wirkt als "Verstärker" und es würde ohne Maßnahmen zur Geräuschminderung eine Belästigung für den Nutzer auftreten. Insbesondere von einem Antrieb der bevorzugt in Schlafräumen eingesetzt wird, darf nahezu keine Geräuschemission ausgehen. Durch die beschriebenen Maßnahmen zur Geräuschminderung wird eine Geräuschemission durch die Antriebsvorrichtung wirkungsvoll verhindert.

Dies kann insbesondere auf einfache Weise dadurch erreicht werden, dass zwischen dem ersten Gehäuse und dem zweiten Gehäuse - hier zwischen dem Innengehäuse 104 und dem Außengehäuse 105 - wenigstens eines oder mehrere elastische Elemente 106 und/oder Federelement(e) angeordnet ist/sind.

Vorzugsweise besteht das wenigstens eine elastische Element 106 aus einem Material, das eine verhältnismäßig hohe innere Dämpfung besitzt. Beispielsweise ist es ein Thermoplastisches Elastomer (TPE). Dieses Material trägt zu einer guten schallgedämmten Auslegung bei.

Einen weiteren entscheidenden Einfluss auf die Schalldämmung hat auch die Formgebung des wenigstens einen elastischen Elementes 106.

Es ist vorteilhaft, wenn keine durchgängige flächige Anlage zwischen dem elastischen Element und dem Innengehäuse 104 bzw. dem Außengehäuse 105 geschaffen wird sondern wenn das elastische Element jeweils in bestimmten Bereichen nur linienförmig an dem Innengehäuse 104 und/oder dem Außengehäuse 105 anliegt. Vorzugsweise ist die Form des elastischen Elementes 106 so gewählt, dass die zu entkoppelten Bauteile nicht auf direktem Wege verbunden sind, sondern das Material unter einem Winkel α auf die beiden zu entkoppelnden Teile trifft, der vorzugsweise zwischen 10° und 80° liegt.

Der Winkel α ermöglicht es dem elastischen Bauteil bzw. Element 106 viel leichter, den zu dämpfenden Schwingungen auszuweichen, als es eine direkte Verbindung täte.

Eine direkte Verbindung würde das Material lediglich auf Druck belasten, die "schräge" Verbindung belastet das Material (auch) auf Biegung.

Vorzugsweise werden an einem Eckbereiche aufweisenden Gehäuse 104 die elastischen Elemente 106 jeweils wie ein Außenhülleneckstück über diese Eckbereiche gestülpt.

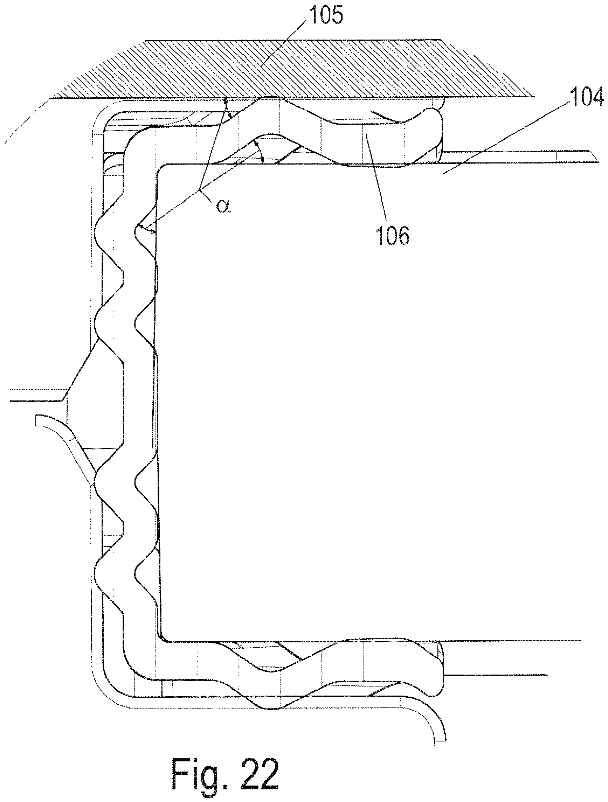

Nach Fig. 22 ist das innere Gehäuse 104 relativ flach, so dass ein elastisches Element 106 dazu genutzt wird, jeweils über zwei benachbarte Eckbereiche des Innengehäuses 104 gestülpt zu werden. Es weist dann eine solche Formgebung auf, dass es die beiden Ecken und die diese verbindende Kante des Innengehäuses 104 einfasst.

Dabei wird das elastische Element 106 vorzugsweise wellenförmig ausgebildet, damit sowohl am Innengehäuse 104 als auch am Außengehäuse 105 Anlagebereiche im erwähnten Winkel (spitzwinklig) gebildet werden.

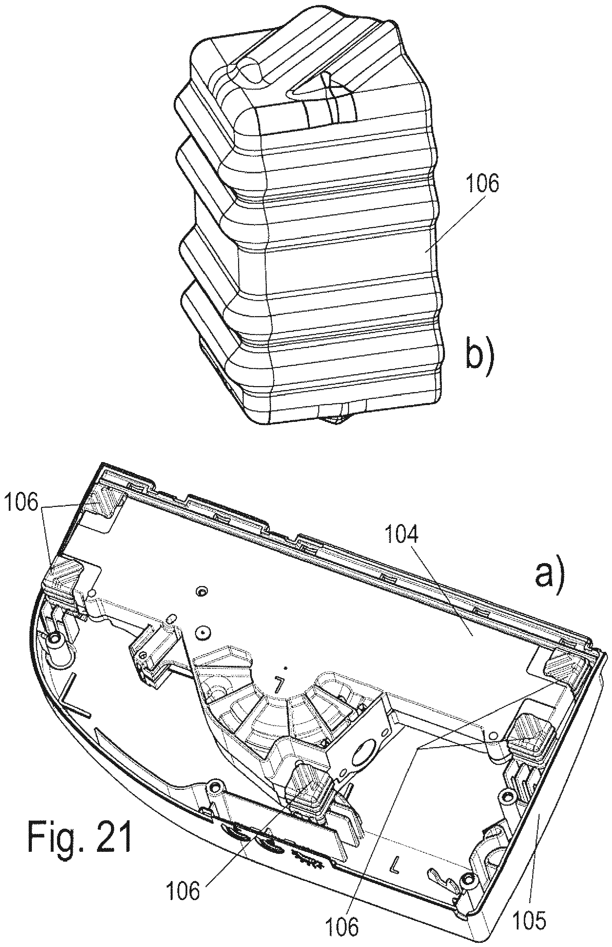

Dies erschließt sich insbesondere gut aus Fig. 21 und der zugehörigen Ausschnittsvergrößerung aus Fig. 22. Im vorliegenden Fall werden fünf der elastischen Elemente 106 über Eckbereiche am Innengehäuse gesetzt. Derart wird eine hochwirksame Entkopplung dieser beiden Gehäuse 104, 105 erreicht, die in einer minimalen Geräuschentwicklung resultiert.

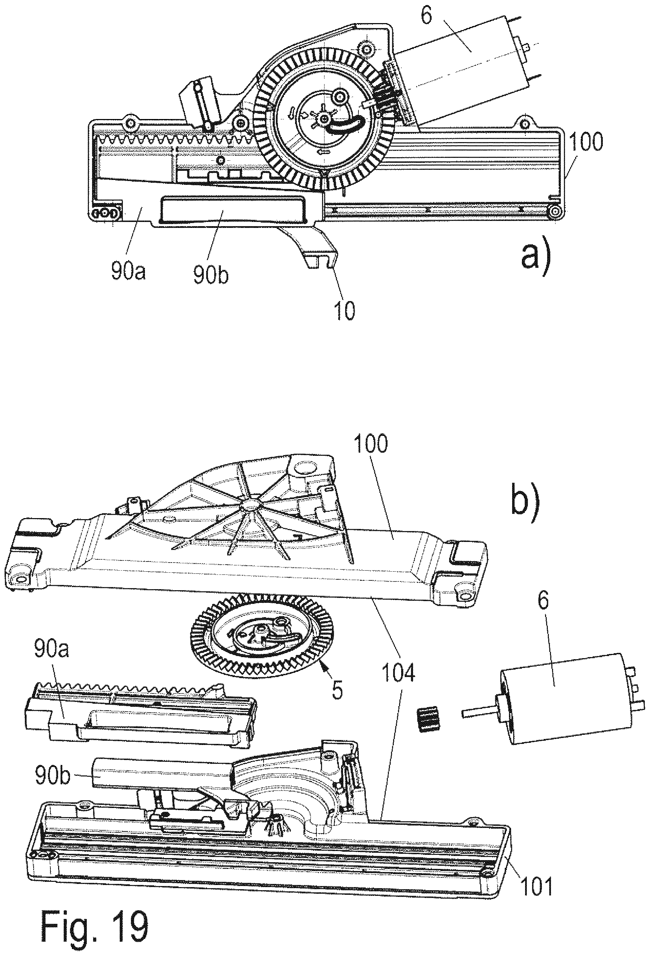

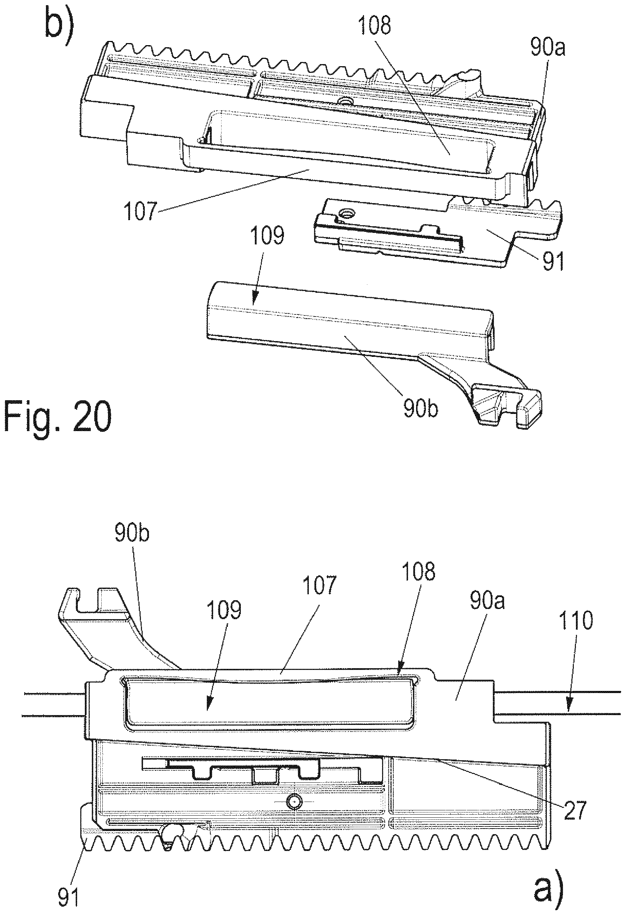

Die Figuren 19 und 20 zeigen Ansichten einer Antriebsvorrichtung, die auch in Hinsicht auf die Getriebeausgestaltung an sich nochmals optimiert wurde.

Ein besonders vorteilhaftes Getriebeelement der bereits beschriebenen Figuren bzw. Ausführungsformen der Erfindung ist jeweils die "Zahnstange 9", die mit der Zahnradanordnung 5 einerseits und mit der Schiebetür 2 andererseits gekoppelt ist und die dazu dient, die Drehbewegungen der Zahnradanordnung 5 in Linearbewegungen umzusetzen.

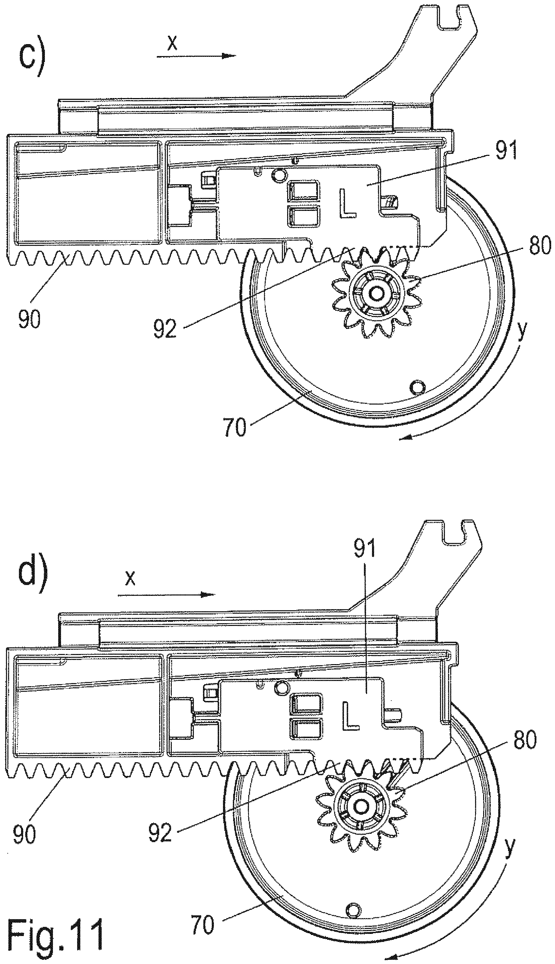

Nach Fig. 11 wird diese Zahnstange 9 in zwei Teile bzw. Segmente aufgeteilt: eine verschiebliche Zahnstange 90 und ein relativ zur Zahnstange 90 und relativ zur Montagebasis (Gehäuse) bewegliches Zahnstangensegment 91. Diese Art der Ausgestaltung und deren Funktionalität wird mit all ihren Vorteilen auch bei dem Ausführungsbeispiel der Fig. 19 und 20 genutzt.

Darüber hinaus ist nach Fig. 19 auch die Zahnstange 90 bzw. deren Segment 90 wiederum zweiteilig ausgebildet.

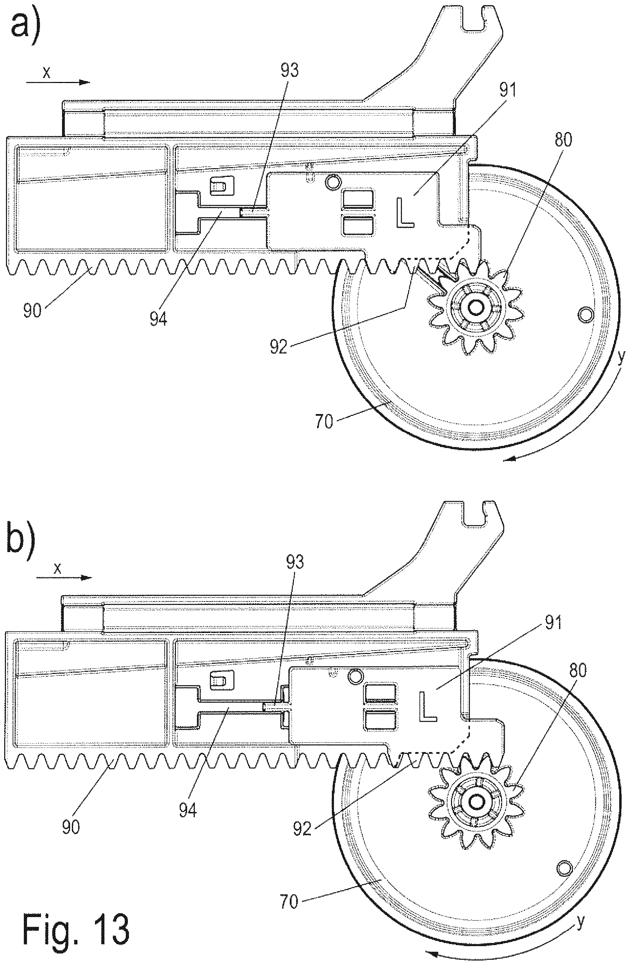

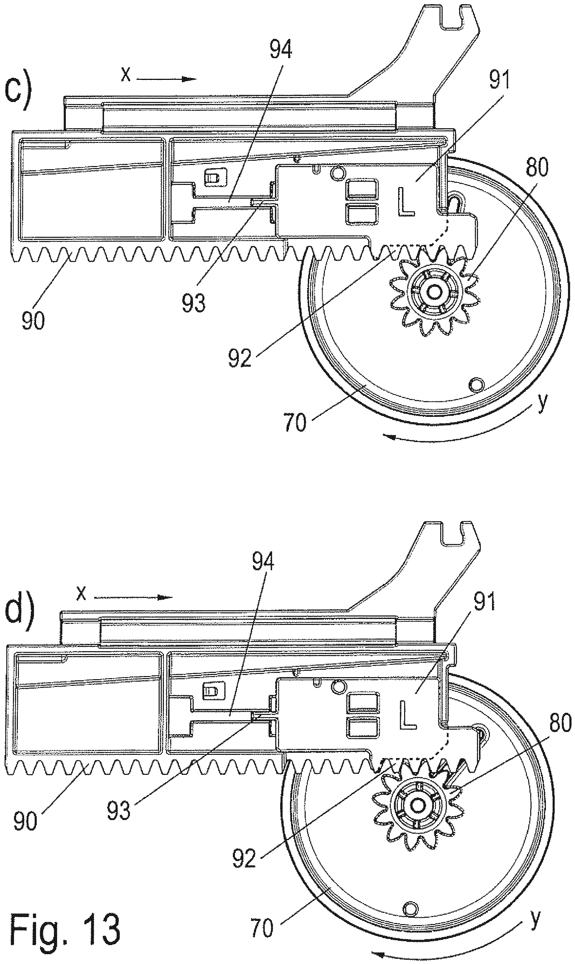

Nach dem Ausführungsbeispielen der Fig. 1 bis 18 ist die Zahnstange 9 oder das Zahnstangensegment 90 sowohl mit dem Getriebe - z.B. der Zahnradanordnung 5 - gekoppelt als auch direkt mit der Schiebetür 2 verbunden. Zusätzlich ist an der Zahnstange 9 eine Abtastkurve - die winklig zur Schieberichtung ausgebildete Kante 27 - angebracht, welche vom Wegsensor genutzt wird, um die Stellung der Zahnstange 9 zu ermitteln. Da eine Führung, besonders eine günstig herzustellende Kunststoffführung, immer Spiel hat, bewirkt die Bewegung an der Tür eine Bewegung der Abtastkurve auch in Tastrichtung. Hierdurch können Messfehler entstehen, welche die Funktion der Steuerung gefährden können.

Um dieses Problem zu beheben, wird die Zahnstange 9 bzw. deren verschiebliches Segment 90 nochmals unterteilt bzw. in zwei Zahnstangenteile aufgeteilt.

Der erste Zahnstangenteil 90a (siehe Fig. 20) beinhaltet die Verzahnung und die Abtastkurve/Kante 27, der zweite Zahnstangenteil 90b ist dagegen über den Mitnehmer 10 mit der Tür gekoppelt.

Beide Zahnstangenteile 90a, 90b sind am Gehäuse - vorzugsweise im Innengehäuse 104 - für sich geführt. Sie verschieben sich in axialer Richtung bzw. in Richtung der Verzahnung gemeinsam, sind aber senkrecht zu dieser Richtung begrenzt relativ zueinander beweglich.

Ein besonderer Vorteil dieser Ausgestaltung besteht darin, dass der Zahnstangenteil 90a mit der Verzahnung ein federndes Element 107 aufweist, welches sich am Zahnstangenteil, der mit der Tür gekoppelt ist, spannt, was die Zahnstange immer an einer definierten Seite der Führung 110 des Innengehäuses 104 hält. Selbst bei durch Spiel verursachten Bewegungen des Türteils, wirken diese sich nicht auf den Zahnteil aus, da dieser stets mit leichtem Druck an der Seite der Führung 110 anliegt

Nach der Ausgestaltung der Fig. 19 weist das erste Zahnstangenteil 90a eine Ausnehmung 108 auf, in welche ein korrespondierender Abschnitt 109 des zweiten Zahnstangenteils 90b eingreift. Dabei ist eine Wandung der Ausnehmung 108a blattfederähnlich geformt (federndes Element 107) und drückt gegen den Abschnitt 109.

### Bezugszeichen

- 1: Antriebsvorrichtung
- 2: Schiebetür
- 3: Möbel
- 3a: Deckplatte
- 3b: Möbelkorpus
- 4: Montagebasis
- 5: Zahnradanordnung
- 6: Elektromotor
- 7: Erstes Zahnrad
- 8: Zweites Zahnrad
- 9: Zahnstange
- 10: Mitnehmerelement
- 11: Schienenkontur
- 12: Steg
- 13: Vorsprung
- 14: Rippe
- 15: Scheibe
- 16: Rippe
- 17: Rippe
- 18: Rippe
- 19: Achse
- 20: Sensoreinrichtung
- 21: Achse
- 22: Drehhebelelement
- 23: Ende
- 24: Schubelement
- 25: Linearwegsensor
- 26: Ende
- 27: Kante
- 28: Steuereinrichtung
- 29: Mitnehmer
- 30: Kurvenführung
- 31: Zapfen
- 32: Übertragungsbolzen
- 33: Führungsschiene

- X: Schieberichtung
- Y: Drehrichtung
- 34: Platte
- 35: Steuerkurve
- 36: Stift
- 37: Laufwegbegrenzungsteil
- 38: Langloch
- 39: Anschlag
- 40: Langloch
- 41: Achse

- 70: Zahnrad
- 80: Zahnrad
- 90: Zahnstange
- 90a, 90b: Zahnstangenteile
- 91: Zahnstangensegment
- 92: Zähne
- 93: Basis
- 94: Ausnehmung

- 100: Innengehäuseunterteil
- 101: Innengehäuseoberteil
- 102: Gehäuseunterteil
- 103: Gehäuseoberteil
- 104: Innengehäuse
- 105: Außengehäuse
- 106: elastisches Element
- 107: federndes Element
- 108: Ausnehmung
- 109: Abschnitt
- 110: Führung

- α: Winkel

## Patentansprüche

1. Antriebsvorrichtung (1) zum motorischen Bewegen- insbesondere zum Öffnen und/oder Schließen - beweglicher Möbelteile von Möbeln, insbesondere zum Öffnen und/oder Schließen einer Schiebetür (2) an einem wenigstens eine oder mehrere der Schiebetüren (2) aufweisenden Möbel (3), wobei die Antriebsvorrichtung folgendes aufweist: ein erstes Gehäuse (104) und ein zweites Gehäuse (105), wobei zwischen dem ersten Gehäuse und dem zweiten Gehäuse wenigstens ein elastisches Element (106) oder mehrere elastische Elemente angeordnet ist/sind.

2. Antriebsvorrichtung nach Anspruch 1, **dadurch gekennzeichnet, dass** das erste Gehäuse vorzugsweise ein Innengehäuse und das zweite Gehäuse ein das Innengehäuse aufnehmendes Außengehäuse ist.

3. Antriebsvorrichtung nach Anspruch 2, **dadurch gekennzeichnet, dass** das elastische Element (106) derart ausgestaltet ist, dass es jedenfalls in einem Bereich unter einem spitzen Winkel auf die Wandungen des Innengehäuses (105) und/oder des Außengehäuses (104) auftrifft.

4. Antriebsvorrichtung nach einem der vorstehenden Ansprüche 2 oder 3, **dadurch gekennzeichnet, dass** das innere Gehäuse (104) eines oder mehrere, insbesondere sämtliche, Getriebe- und Antriebsteile aufnimmt, wie Zahnräder, einen Elektromotor und/oder einen Wegsensor.

5. Antriebsvorrichtung nach einem der vorstehenden Ansprüche 2 bis 4, **dadurch gekennzeichnet, dass** das äußere Gehäuse (105) das innere Gehäuse (104) aufnimmt und vorzugsweise eine Elektronik-Platine.

6. Antriebsvorrichtung nach einem der vorstehenden Ansprüche, **dadurch gekennzeichnet, dass** das elastische Element (106) wellenförmig ist.

7. Antriebsvorrichtung nach einem der vorstehenden Ansprüche, **dadurch gekennzeichnet, dass** sie weiter aufweist: eine an dem Möbel festlegbare Montagebasis (4), an der der Elektromotor (6) festgelegt ist, der über eine Getriebeanordnung auf die Schiebetür (2) einwirkt, wobei die Getriebeanordnung zwei nach einem vorgegebenen Schiebeweg des Möbelteils, insbesondere der Schiebetür, außer Eingriff gelangende und bei einem darauf folgenden Schließen des Möbelteils, insbesondere der Schiebetür, erneut miteinander in Eingriff gelangende, Getriebeelemente (8, 9) aufweist, und/oder wobei die Getriebeanordnung ein Getriebeelement aufweist, dass dazu ausgelegt ist, nach einem vorgegebenen Schiebeweg des Möbelteils, insbesondere der Schiebetür (2), mit dem Möbelteil, insbesondere der Schiebetür, außer Eingriff und bei einem darauf folgenden Schließen des Möbelteils, insbesondere der Schiebetür, erneut mit diesem/dieser in Eingriff zu gelangen.

8. Antriebsvorrichtung nach Anspruch 7, **dadurch gekennzeichnet, dass** sie eine Synchronisations- und/oder Vorbeschleunigungseinrichtung aufweist, die dazu ausgelegt ist, die ausgekoppelten Getriebeelemente bei einem Schließvorgang synchronisierend und/oder vorbeschleunigend miteinander in Eingriff zu bringen und dass die in und außer Eingriff bringbaren Getriebeelemente als ein drehbares Zahnrad (8) und eine damit kämmende, linear verschiebliche Zahnstange (9) ausgebildet sind.

9. Antriebsvorrichtung nach Anspruch 8, **dadurch gekennzeichnet, dass** die in und außer Eingriff bringbaren Getriebe- und Möbelteile die Zahnstange (9) und die Schiebetür (2) sind.

10. Elastisches Element, insbesondere für eine Antriebsvorrichtung nach einem der vorstehenden Ansprüche, **dadurch gekennzeichnet, dass** das elastische Element (106) derart ausgestaltet ist, dass es jedenfalls in einem Bereich unter einem spitzen Winkel auf die Wandungen des Innengehäuses (105) und/oder des Außengehäuses (104) auftrifft.

11. Elastisches Element nach Anspruch 10, **dadurch gekennzeichnet, dass** das elastische Element an den Gehäusewandungen im Wesentlichen linienförmig anliegt.

12. Elastisches Element nach Anspruch 10 oder 11, **dadurch gekennzeichnet, dass** das elastische Element an den Gehäusewandungen im Wesentlichen punktförmig anliegt.

13. Elastisches Element nach einem der Ansprüche 10 bis 12, **dadurch gekennzeichnet, dass** das elastische Element eine im Schnitt wellenförmige Kontur aufweist.

14. Elastisches Element nach einem der Ansprüche 10 bis 13, **dadurch gekennzeichnet, dass** das elastische Element aus einem Elastomer gefertigt ist.

15. Elastisches Element nach einem der Ansprüche 10 bis 14, **dadurch gekennzeichnet, dass** das elastische Element aus einem thermoplastischen Elastomer (TPE) gefertigt ist.
